# EUROPEAN PATENT APPLICATION

(11) **EP 4 401 336 A1**
(43) Date of publication of application: **17.07.2024**
(21) Application number: 22863582.7
(22) Date of filing: 01.09.2022
(51) Int. Cl.: H04B 7/185, H04W 4/38, H04W 24/10

(54) **QUALITY-OF-SERVICE FEATURE PARAMETER DETERMINATION AND DATA TRANSMISSION METHODS AND APPARATUSES, AND DEVICE**

(30) Priority: 06.09.2021 CN 202111039130
(71) Applicant: Vivo Mobile Communication Co., Ltd., Dongguan, Guangdong 523863 (CN)
(72) Inventor: LI, Jianzhi, Dongguan, Guangdong 523863 (CN); JIANG, Dajie, Dongguan, Guangdong 523863 (CN)
(74) Representative: Conti, Marco
(86) International application number: PCT/CN2022/116517
(87) International publication number: WO 2023/030447

(57) **Abstract**

This application discloses a quality of service characteristic parameter determining method and apparatus, a data sending method and apparatus, and a device, and pertains to the field of communication technologies. The quality of service characteristic parameter determining method in embodiments of this application includes: determining, by a sending device, a sensing and communication quality of service QoS characteristic parameter, where the sensing and communication QoS characteristic parameter includes at least one of the following: a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

## Description

### CROSS-REFERENCE TO RELATED APPLICATIONS

This application claims priority to Chinese Patent Application No. 202111039130.2, filed in China on September 6, 2021, which is incorporated herein by reference in its entirety.

### TECHNICAL FIELD

This application pertains to the field of communication technologies, and in particular, relates to a quality of service characteristic parameter determining method and apparatus, a data sending method and apparatus, and a device.

### BACKGROUND

In addition to a communication capability, a future mobile communication system such as a beyond 5th generation (Beyond 5th Generation, B5G) system or a 6th generation (6th Generation, 6G) system has a sensing capability. One or more devices having a sensing capability can send and receive a radio signal to sense information such as an orientation, a distance and a speed of a target object, or detect, track, identify, or image a target object, event or environment. In the future, with deployment of small cells with a large bandwidth capability of a high band such as a millimeter wave and terahertz in a 6G network, a sensing resolution is significantly improved in compared with that of a centimeter wave, so that the 6G network can provide a more precise sensing service.

Integrated sensing and communication (Integrated Sensing and Communication, ISAC) has the potential to integrate wireless sensing into a large-scale mobile network, which becomes a perceptive mobile network (Perceptive Mobile Networks, PMNs). The PMN may be evolved from a current 5G mobile network, and is expected to become a ubiquitous wireless sensor network, to provide a stable and high-quality mobile communication service. The PMN may be built on an existing mobile network infrastructure without a major change to a network structure and a device. A maximum capacity of a mobile network is released, and high infrastructure costs are avoided to build a new wide area wireless sensor network separately. With expansion of coverage, integrated communication and sensing capabilities are expected to implement many new applications. The perceptive mobile network can provide both a communication service and a wireless sensing service, and because of its large broadband coverage and powerful infrastructure, this can become a pervasive wireless sensing solution. Its coordinated communication and sensing capabilities will enhance the productivity of our society and help generate a large number of new applications that cannot be effectively implemented by an existing sensor network. Some early work on passive sensing using a mobile signal has proven its potential. For example, traffic monitoring, weather forecast, and rainfall remote sensing based on a radio signal of a global system for mobile communication (Global System for Mobile Communication, GSM). The perceptive mobile network can be widely applied to communication and sensing in the areas of transportation, communication, energy, precision agriculture, and safety, while existing solutions are either infeasible or inefficient. The PMN can further provide a complementary sensing capability for an existing sensor network with unique day and night operation functions, and can penetrate fog, leaves or even solid objects.

However, because there are many types of sensing services and communication services, and currently there is no explicit definition of an integrated sensing and communication quality of service (Quality of Service, QoS) characteristic parameter, there is a problem that sensing accuracy and sensing efficiency cannot be ensured at the same time.

### SUMMARY

Embodiments of this application provide a quality of service characteristic parameter determining method and apparatus, a data sending method and apparatus, and a device, to resolve a problem in the prior art that because an integrated sensing and communication QoS characteristic parameter is not defined, there is a problem that sensing accuracy and sensing efficiency cannot be ensured at the same time.

According to a first aspect, a quality of service characteristic parameter determining method is provided, including:
determining, by a sending device, a sensing and communication quality of service QoS characteristic parameter, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to a second aspect, a quality of service characteristic parameter determining apparatus is provided, including:
a first determining module, configured to determine a sensing and communication quality of service QoS characteristic parameter, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to a third aspect, a quality of service characteristic parameter determining method is provided, including:
obtaining, by a receiving device, a sensing and communication quality of service QoS characteristic parameter, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to a fourth aspect, a quality of service characteristic parameter determining apparatus is provided, including:
a first obtaining module, configured to obtain a sensing and communication quality of service QoS characteristic parameter, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to a fifth aspect, a data sending method is provided, including:
obtaining, by a core network device, target data, where the target data includes a sensing and communication quality of service QoS characteristic parameter, an integrated sensing and communication (Integrated Sensing and Communication, ISAC) quality index (Quality Identity, QI), a sensing quality index (Sensing Quality Identity, SQI), and a communication quality index; and
sending, by the core network device, the target data to a sending device and/or a receiving device, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to a sixth aspect, a data sending apparatus is provided, including:
a second obtaining module, configured to obtain target data, where the target data includes a sensing and communication quality of service QoS characteristic parameter, an integrated sensing and communication quality index ISAC QI, a sensing quality index SQI, and a communication quality index; and
a first sending module, configured to send the target data to a sending device and/or a receiving device, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to a seventh aspect, a sending device is provided. The sending device includes a processor, a memory, and a program or an instruction that is stored in the memory and that can be run on the processor, and the program or the instruction is executed by the processor to implement the steps of the method according to the first aspect.

According to an eighth aspect, a sending device is provided, including a processor and a communication interface, where the processor is configured to determine a sensing and communication quality of service QoS characteristic parameter, where
the sensing and communication QoS characteristic parameter includes at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to a ninth aspect, a receiving device is provided. The receiving device includes a processor, a memory, and a program or an instruction that is stored in the memory and that can be run on the processor, and the program or the instruction is executed by the processor to implement the steps of the method according to the third aspect.

According to a tenth aspect, a receiving device is provided, including a processor and a communication interface, where the processor is configured to obtain a sensing and communication quality of service QoS characteristic parameter, where
the sensing and communication QoS characteristic parameter includes at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to an eleventh aspect, a core network device is provided. The core network device includes a processor, a memory, and a program or an instruction that is stored in the memory and that can be run on the processor, and the program or the instruction is executed by the processor to implement the steps of the method according to the fifth aspect.

According to a twelfth aspect, a core network device is provided, including a processor and a communication interface, where the processor is configured to obtain target data, where the target data includes a sensing and communication quality of service QoS characteristic parameter, an integrated sensing and communication quality index ISAC QI, a sensing quality index SQI, and a communication quality index; and the communication interface is configured to send the target data to a sending device and/or a receiving device, where
the sensing and communication QoS characteristic parameter includes at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

According to a thirteenth aspect, a readable storage medium is provided. The readable storage medium stores a program or an instruction, and the program or the instruction is executed by a processor to implement the steps of the method according to the first aspect, the third aspect, or the fifth aspect.

According to a fourteenth aspect, a chip is provided. The chip includes a processor and a communication interface, the communication interface is coupled to the processor, and the processor is configured to run a program or an instruction to implement the steps of the method according to the first aspect, the third aspect, or the fifth aspect.

According to a fifteenth aspect, a computer program/program product is provided. The computer program/program product is stored in a non-transient storage medium, and the program/program product is executed by at least one processor to implement the steps of the method according to the first aspect, the third aspect, or the fifth aspect.

According to a sixteenth aspect, a communication device is provided, configured to perform the steps of the method according to the first aspect, the third aspect, or the fifth aspect.

In the embodiments of this application, a sensing and communication quality of service QoS characteristic parameter is determined, so that accurate signal sending can be implemented, thereby improving accuracy of integrated sensing and communication and efficiency of integrated sensing and communication.

### BRIEF DESCRIPTION OF DRAWINGS

FIG. 1 is a schematic flowchart of a quality of service characteristic parameter determining method according to an embodiment of this application;
FIG. 2 is a schematic diagram of a network node in an application case 1;
FIG. 3 is a schematic diagram of a V2X sensing scenario;
FIG. 4 is a schematic diagram of a concurrent sensing scenario;
FIG. 5 is a schematic diagram of data to DRB mapping in a concurrent sensing scenario;
FIG. 6 is a schematic module diagram of a quality of service characteristic parameter determining apparatus according to an embodiment of this application;
FIG. 7 is a first structural block diagram of a sending device according to an embodiment of this application;
FIG. 8 is a second structural block diagram of a sending device according to an embodiment of this application;
FIG. 9 is a second schematic flowchart of a quality of service characteristic parameter determining method according to an embodiment of this application;
FIG. 10 is a second schematic module diagram of a quality of service characteristic parameter determining apparatus according to an embodiment of this application;
FIG. 11 is a schematic flowchart of a data sending method according to an embodiment of this application;
FIG. 12 is a schematic module diagram of a data sending apparatus according to an embodiment of this application; and
FIG. 13 is a structural block diagram of a communication device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

It should be noted that technologies described in the embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency-Division Multiple Access, SC-FD-MA), and other systems. The terms "system" and "network" in the embodiments of this application may be used interchangeably. The technologies described can be applied to both the systems and the radio technologies mentioned above as well as to other systems and radio technologies. The following describes a new radio (New Radio, NR) system for example purposes, and NR terms are used in most of the following descriptions. These technologies can also be applied to applications other than an NR system application, such as a 6th generation (6th Generation, 6G) communication system.

The following first describes the related technologies involved in this application as follows:

### 1. Integrated sensing and communication

In recent decades, wireless communication and radar sensing (Communication & Sensing, C&S) have been developing in parallel, but the intersection is limited. They have many similarities in signal processing algorithms, devices, and system architectures to some extent. In recent years, more and more researchers have paid attention to coexistence, cooperation, and joint design of the two systems.

In the early days, people conducted extensive research on coexistence of a communication system and a radar system, with a focus on developing an effective interference management technology to enable the two separately deployed systems to operate smoothly without interfering with each other. Although the radar and communication systems may be even physically integrated in a same location, two different signals are transmitted in time/frequency domain. The two systems cooperate and share same resources to minimize interference while working simultaneously. Corresponding measures include beamforming, cooperative spectrum sharing, primary-secondary spectrum sharing, dynamic coexistence, and the like. However, effective interference cancellation generally has strict requirements for node mobility and information exchange between nodes. Therefore, spectral efficiency improvement is relatively limited. Since interference in a coexistence system is caused by transmitting two independent signals, it is natural to ask whether one transmit signal can be used to perform communication and radar sensing simultaneously. The radar system typically uses specially designed waveforms such as a short pulse and a chirp to achieve high power radiation and simplify receiver processing. However, these waveforms are not necessary for radar detection, and passive radar or passive sensing using different radio signals as sensing signals is a good example.

Machine learning, especially deep learning, further promotes the potential of nondedicated radio signals for radar sensing. With these technologies, traditional radar is evolving towards more general wireless sensing. Wireless sensing herein may be broadly referred to as retrieving information from received radio signals rather than modulating communication data onto signals on a transmitter. For wireless sensing related to a sensing target location, dynamic parameters such as a target signal reflection latency, an angle of arrival (Angle of Arrival, AoA), an angel of departure (Angel of Departure, AoD), and Doppler may be estimated by using a common signal processing method. A sensing target physical characteristic may be implemented by measuring a device, an object, and a live inherent mode signal. The two sensing manners may be respectively referred to as sensing parameter estimation and pattern recognition. In this sense, wireless sensing is more general sensing techniques and applications using radio signals.

### 2. Radar technology

The radar has developed for decades since the first half of the 20th century. Modern radar systems are deployed all over the world and have a variety of applications, including air traffic control (Air Traffic Control, ATC), geophysical monitoring, weather observation, defense and security monitoring, and the like. Below 10 GHz, most of spectrum resources are mainly allocated to the radar, and existing wireless communication systems such as 5G NR, LTE, and Wi-Fi also exist within this spectrum range. At higher frequencies such as millimeter waves, communication and radar platforms are also expected to coexist harmoniously. However, with further development of wireless communication technologies, more and more radar bands will be interfered with. From a historical perspective, the radar and communication systems have evolved towards miniaturization and higher bands. Currently, in a millimeter-wave band, a hardware architecture, a channel characteristic, and a signal processing method of the existing radar and communication systems are very close to each other. From a civilian perspective, a large part of emerging 5G/B5G applications require joint design of sensing and communication, such as Internet of Things applications like smart cities and smart homes, and intelligent traffic applications like Internet of vehicles and self-driving. From a military perspective, the development of radio frequency systems such as radar, communication, and electronic warfare has long been in a fragmented and autonomous state, consuming a large amount of spectrum and hardware resources, and reducing effectiveness of a combat platform. In order to efficiently utilize spectrum resources and serve a variety of emerging application scenarios of civil and military applications, radar and communication spectrum sharing (Radar and Communication Spectrum Sharing, RCSS) has recently attracted great attention from academia and industry.

In general, the RCSS technology includes two research paths: (1) radar-communication coexistence (Radar-Communication Coexistence, RCC); and (2) integrated radar and communication (Dual-Functional Radar-Communication system, DFRC). The former considers how to design an effective interference elimination and management technology to achieve non-interference coexistence of separate radar and communication systems by sharing a same spectrum. The latter considers how to design an integrated signal processing scheme to simultaneously achieve communication and radar sensing functions on a same hardware platform, in addition to sharing the same spectrum between the radar and communication systems. The RCC technology often requires periodic information exchange between the radar and communication systems to achieve cooperation and mutual benefit, such as a transmission waveform and a beam pattern of radar, a modulation mode and a frame format of communication, and channel state information between the radar and communication systems. In practical systems, this information exchange process is more complex. The DFRC technology directly implements spectrum sharing by using a shared hardware platform, without requiring additional information exchange. In addition, the DFRC technology can also improve performance of both through their collaborative work. As described above, currently, the current connotation and application of the DFRC technology go far beyond improving spectrum utilization, but have been further expanded to include various emerging civilian and military scenarios, such as Internet of vehicles, indoor positioning, and covert communication.

### 3. LTE/5G quality of service (Quality of Service, QoS)

QoS means that the network uses various underlying technologies to provide a better service capability for specified network communication to resolve problems such as a network delay and congestion, thus realizing a transmission capability guarantee mechanism required by a specific service. When the network is congested, all data flows may be discarded. To meet requirements for different applications and quality of service of users, the network needs to allocate and schedule resources according to the user requirements, and provide different quality of service for different data flows. An important data packet with a high real-time requirement is processed first; and a lower processing priority is provided for an ordinary data packet with a weak real-time requirement, and this packet is even discarded when the network is congested.

QoS is a technology concept borrowed from the Internet. The International Telecommunication Union (International Telecommunication Union, ITU) defines quality of service (QoS) in the x.902 standard, that is, the information technology open processing reference model: a set of quality requirement sets in collective behavior of one or more objects. Some quality of service parameters such as a throughput, a transmission delay, and an error rate describe a speed and reliability of data transmission.

LTE is a bearer (Bearer)-based QoS policy design. Radio bearers are classified into a signaling radio bearer (Signaling Radio Bearer, SRB) and a data radio bearer (Data Radio Bearer, DRB). The SRB is used for signaling transmission, the DRB is used for data transmission, and scheduling priorities of all SRBs are higher than those of all DRBs. A quality of service class identifier (QoS Class Identifier, QCI) is a parameter that is used by the system to identify a service packet transmission characteristic, and the protocol TS 23.203 defines QCI values corresponding to different bearer services. According to different QCIs, bearers (Bearer) may be classified into two types: a guaranteed bit rate (Guaranteed Bit Rate, GBR) bearer and a non-guaranteed bit rate (Non-GBR) bearer. The GBR bearer is used for services with a high real-time requirement, where a scheduler is required to guarantee a lowest bit rate for this type of bearer, and a QCI range is 1 to 4. In addition to this lowest rate, a highest rate is required for limitation. For the GBR bearer, a maximum bit rate (Maximum Bit Rate, MBR) is used to limit a maximum rate of the bearer. The MBR parameter defines an upper limit of the rate that the GBR can reach when radio bearer (Radio Bearer) RB resources are sufficient. A value of the MBR is greater than or equal to a value of the GBR. The non-GBR bearer is used for services with a low real-time requirement, where no scheduler is required to guarantee a lowest bit rate for this type of bearer, and a QCI range is 5 to 9. In the case of network congestion, the service needs to meet a requirement of reducing the rate. For the non-GBR, an aggregate maximum bit rate (Aggregate Maximum Bit Rate, UE-AMBR) is used to limit a maximum rate of all Non-GBR bearers.

A 5G QoS characteristic (5G QoS Characteristics) is a characteristic parameter set when each network node (UE, a gNB, or a UPF) process each QoS flow. The 5G characteristic parameter set is divided into a standardized QoS characteristic and an operator-specific (Operator-Specific) QoS characteristic. The former is a standardized predefined value of each parameter and is associated with a fixed SQI value (an index for marking a series of parameters), and the latter is a parameter value configured by operators. 5G uses an in-band QoS marking mechanism of a data flow. Based on a QoS requirement of a service, a gateway or an APP server marks a corresponding QoS processing label of the data flow. The network side performs data packet forwarding based on the QoS label. The QoS label may change in real time based on requirements of the service data flow to meet service requirements in real time. An NAS of a GW maps a plurality of Internet Protocol (Internet Protocol, IP) flows (flow) with a same QoS requirement to a same QoS flow. A gNB maps a QoS flow to a DRB, so that the wireless side adapts to a QoS requirement. There is a degree of freedom on a radio access network (Radio Access Network, RAN) side. For example, the gNB may convert a QoS flow into a DRB. Downlink mapping is implemented by the network, and uplink mapping is based on typical (reflective) QoS or a radio resource control (Radio Resource Control, RRC) configuration. A 5G QoS model also supports guaranteed bit rate (GBR QoS) QoS flows and non-guaranteed bit rate (Non-GBR) QoS flows, the AMBR is also used to suppress a total bandwidth of the non-GBR, and the 5G QoS model also supports reflective QoS.

In 5G standalone (Standalone, SA) networking, a bearer still exists between a gNodeB and UE, but there is no bearer between the gNodeB and a core network, and an EPS Bearer in non-standalone (Non-Standalone, NSA) networking becomes a QoS Flow. The QoS flow is a finest granularity for QoS control from a 5G core network to a terminal. Each QoS Flow is identified by using a quality of service flow identifier (QoS Flow ID, QFI). Within a protocol data unit (Protocol Data Unit, PDU) session, a QFI of each QoS Flow is unique. The core network notifies the gNodeB of a 5G QoS identifier (5G QoS Identifier, 5QI) corresponding to each QoS flow, so as to specify a QoS attribute of the QoS flow. A bearer still exists between the gNodeB and the UE in the 5G SA network, and the gNodeB maps a QoS flow to a bearer. There may be a multiple-to-one mapping relationship between a QoS Flow and a radio bearer.

When the UE initiates a service request, the gNodeB reads a QoS attribute value of each QoS Flow in a message from the core network, maps different QoS flows (different 5QIs) to corresponding bearers according to a parameter configuration, and configures a proper radio bearer parameter and a transmission resource configuration parameter for the service. Mapping from a QoS flow to a DRB is defined by a protocol layer newly added to 5G, that is, a service data adaptation protocol (Service Data Adaptation Protocol, SDAP). A main function of the SDAP is to add an identifier (that is, a QFI value) of a QoS flow to a data packet, and a receive end reads the value from an SDAP header of the data packet, and maps one or more QoS flows to one DRB.

With reference to the accompanying drawings, the following describes in detail a quality of service characteristic parameter determining method and apparatus, a data sending method and apparatus, and a device provided in the embodiments of this application by using some embodiments and application scenarios thereof.

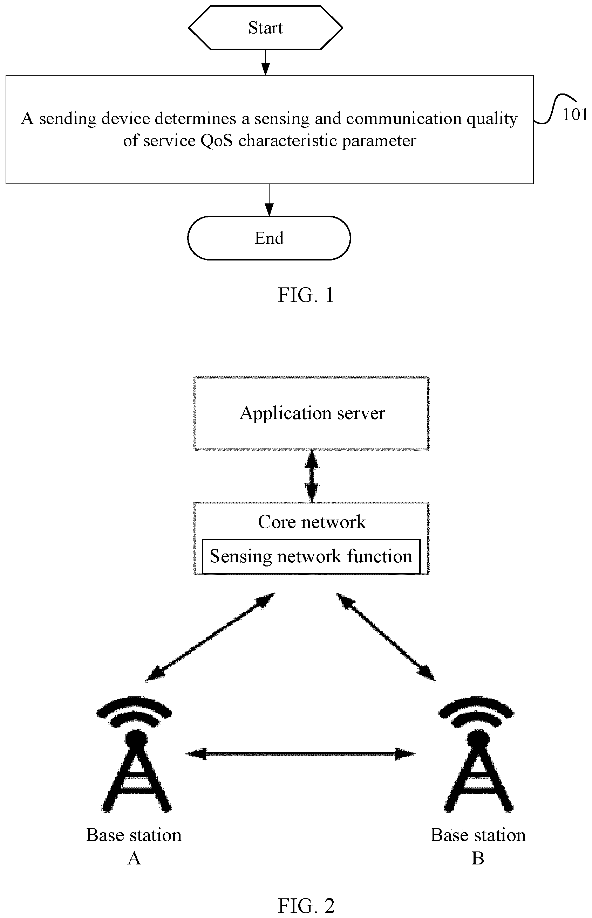

As shown in FIG. 1, an embodiment of this application provides a quality of service characteristic parameter determining method, including:
Step 101: A sending device determines a sensing and communication quality of service QoS characteristic parameter.

It should be noted that this application mainly focuses on an integrated sensing and communication service, that is, a communication service and a sensing service need to be performed at the same time. Therefore, the sending device needs to determine the sensing and communication QoS characteristic parameter, that is, the sending device needs to determine both a sensing QoS characteristic parameter and a communication QoS characteristic parameter.

It should be noted that the sensing and communication QoS characteristic parameter is used to determine sensing and communication parameter configuration information, so that the sending device implements sending of a first signal according to the sensing and communication parameter configuration information, that is, the sensing and communication QoS characteristic parameter aims to ensure accurate sending of the first signal.

It should be noted herein that, when a communication service and a sensing service exist at the same time, if signals of the two can be sent by using a same signal at the same time, the sending device sends an integrated sensing and communication signal. If signals of the two cannot be sent by using a same signal, a sensing signal and a communication signal need to be separately sent, and the two may be sent through time division multiplexing, frequency division multiplexing, or code division multiplexing. In this case, the sending device sends a sensing signal and/or a communication signal. In other words, the first signal includes at least one of a sensing signal, a communication signal, and an integrated sensing and communication signal.

Further, it should be noted that the sensing and communication QoS characteristic parameter includes at least one of the following:
A101. Sensing delay budget (Sensing Delay Budget, SDB).

It should be noted that the sensing delay budget is used to define a maximum sensing delay of a sensing service, and is used to quantitatively describe a real-time requirement of the sensing service.

A102. Sensing resolution (Sensing Resolution, SR).

It should be noted that the sensing resolution is used to define a granularity of a sensing service, and is related to a network hardware device and a specific resource configuration, and this factor involves different configuration resource for different sensing services. For example, a distance resolution is related to a configured bandwidth of a sensing signal, and an angle resolution is related to an antenna aperture of a base station or a terminal.

A103. Maximum sensing range (Maximum Sensing Range, MSR).

It should be noted that the maximum sensing range is used to define a maximum measurement range of a sensing measurement quantity supported by a sensing service.

A104. Sensing error (Sensing Error, SE).

It should be noted that the sensing error is used to define sensing performance of a sensing service, that is, sensing accuracy, and is related to a network hardware device, a specific resource configuration, and a signal-to-noise ratio (Signal-to-Noise Ratio, SNR). The sensing error may be defined from one of the following three aspects: (1) a maximum error; (2) a percentage of the maximum error and a real value (a relative maximum error); and (3) a relative error distribution.

A105. Continuous sensing capability (Continuous Sensing Capability, CSC).

It should be noted that the continuous sensing capability is used to define a continuous sensing support capability of a sensing service, and is mainly divided into single sensing and continuous sensing (for example, target tracking and scanning imaging).

A106. Sensing update rate (Sensing Update Rate).

It should be noted that the sensing update rate is used to define a result update rate of sensing processing that requires a continuous sensing service.

A107. Integrated sensing and communication signal quality (ISAC Signal Quality).

It should be noted that the integrated sensing and communication signal quality is used to define signal quality required by an integrated sensing and communication service, and different integrated sensing and communication services have different requirements.

A108. Sensing security (Sensing Security).

It should be noted that the sensing security defines security requirements for different sensing services and is classified into three levels.

A109. Sensing privacy (Sensing Privacy).

It should be noted that the sensing privacy defines privacy requirements for different sensing services and is classified into three levels.

A110. Detection probability.

It should be noted that the detection probability is defined as a capability of determining whether there is a sensing target, and is assumed as a probability of determining yes in a case that the target exists.

A111. False alarm probability.

It should be noted that the false alarm probability is defined as a capability of determining whether there is a sensing target, and is assumed as a probability of determining yes in a case that the target does not exist.

A112. Packet delay budget.

A113. Packet error rate.

A114. Maximum data burst volume.

A115. Maximum data rate.

A116. Bit error rate.

A117. Averaging window.

It should be noted that the foregoing A101 to A111 are generally sensing-related QoS characteristic parameters, and A112 to A117 are generally communication-related QoS characteristic parameters.

It should be noted herein that three service types: a guaranteed bit rate (GBR), a non-guaranteed bit rate (Non-GBR), and a delay critical GBR (Delay Critical GBD) are defined in 5G, and data services that have different real-time requirements are classified. A sensing service has a wide range of coverage, and one or more devices having a sensing capability can send and receive a radio signal to sense information such as an orientation, a distance and a speed of a target object, or detect, track, identify, or image a target object, event or environment. In the future, with deployment of small cells with a large bandwidth capability of a high band such as a millimeter wave and terahertz in a 6G network, a sensing resolution is significantly improved in compared with that of a centimeter wave, so that the 6G network can provide a more precise sensing service. Some common sensing services are shown in the following Table 1.

**Table 1 Classification of common sensing services**

| Sensing physical range | Sensing real-time requirement | Sensing function | Application purpose |
|---|---|---|---|
| Large | Medium | Weather, air quality, etc. | Meteorology, agriculture, and life services |
| Large | Medium | Traffic flow (road) and human flow (subway station) | Smart city, intelligent transportation, and business services |
| Large | Medium | Animal activity, migration, etc. | Animal husbandry, ecological environment protection, etc. |
| Large | High | Target tracing, distance measurement, speed measurement, and angle measurement | Many application scenarios of traditional radar, V2X, etc. |
| Large | Low | 3D map construction | Navigation and smart city |
| Small | High | Gesture recognition | Smart phone interaction, games, and smart home |
| Small | High | Heartbeat/Respiration, etc. | Health monitoring and medical care |
| Small | Medium | Imaging | Security inspection and logistics |
| Small | Low | Material | Construction, manufacturing, exploration, etc. |

Optionally, Table 2 provides a specific definition manner of a sensing QoS characteristic parameter, where the sensing QoS characteristic parameter includes at least one of parameters in Table 2.

**Table 2 Definition of the sensing QoS characteristic parameter**

| Parameters | Meaning | Parameter subdivision | Notes |
|---|---|---|---|
| Sensing service type | The sensing service type is defined according to a sensing physical | N/A | Being classified according to a |
| (Sensing Service Type) | range and a real-time requirement. Specifically, Type I corresponds to a large sensing range and a high real-time requirement (Delay Critical LSS); Type II corresponds to a large sensing range and a low real-time requirement (LSS); Type III corresponds to a small sensing range and a low real-time requirement (Delay Critical SSS); Type IV corresponds to a small sensing range and a low real-time requirement (SSS). | | transmission real-time requirement of a sensing computing result or a sensing intermediate computing amount (intermediate result). |
| Sensing priority level (Sensing Priority Level) | The priority level is used to determine a resource scheduling priority of a sensing QoS flow. | N/A | This parameter is used to distinguish each sensing QoS flow of UE, and is also used to distinguish sensing QoS flows of different terminals. A smaller parameter indicates a higher priority. |
| Sensing delay budget (Sensing Delay Budget, SDB) | It defines a maximum sensing delay of a sensing service, and is used to quantitatively describe a real-time requirement of the sensing service. | N/A | A value unit is generally ms. A smaller value indicates a higher sensing real-time requirement. |
| Sensing resolution (Sensing Resolution, SR) | It defines a granularity of a sensing service, and is related to a network hardware device and a specific resource configuration, and this factor involves different configuration resource for different sensing services. For example, a distance resolution is related to a configured bandwidth of a sensing signal, and an angle resolution is related to an antenna aperture of a base station or a terminal. | Distance resolution, speed resolution, angle resolution, imaging resolution, temperature resolution, air pressure resolution, humidity resolution, etc. | Different sensing services have different sensing resolutions. |
| Maximum sensing range (Maximum Sensing Range, MSR) | It defines a maximum measurement range of a sensing measurement quantity supported by a sensing service. | Maximum sensing distance, maximum sensing speed, maximum sensing angle, maximum sensing temperature, maximum sensing pressure, maximum sensing humidity, etc. | Different sensing services have different maximum sensing limits. |
| Sensing error (Sensing Error, SE) | It defines sensing performance of a sensing service, that is, sensing accuracy, and is related to a network hardware device, a specific resource configuration, and an SNR. The sensing error may be defined from one of the following three aspects: (1) a maximum error; (2) a percentage of the maximum error and a real value (a relative maximum error); and (3) a relative error distribution. | N/A | The sensing error is different from the sensing resolution. The former defines a maximum deviation between a sensing real value and an actual sensing result that can be tolerated by the service, and the latter defines sensing accuracy requirements of different sensing services. |
| Continuous sensing capability (Continuous Sensing Capacity, CSC) | It defines a continuous sensing support capability of a sensing service, and is mainly divided into single sensing and continuous sensing (for example, target tracking and scanning imaging) | N/A | Not applicable to some sensing services. |
| Sensing update rate (Sensing Update Rate) | It defines a result update rate of sensing processing that requires a continuous sensing service. | Distance update rate, speed update rate, angle update rate, imaging update rate, temperature update rate, air pressure update rate, humidity update rate, etc. | Applicable to sensing services requiring continuous sensing. |
| Sensing signal quality (Sensing Signal Quality) | It defines sensing signal quality required by a sensing service, and different sensing services have different requirements. | Received signal strength, signal-to-noise ratio, signal to interference plus noise ratio, signal clutter ratio, signal sidelobe characteristic, and peak-to-average ratio PAPR of a sensing signal | |
| Sensing security (Sensing Security) | It defines security requirements for different sensing services and is classified into three levels. | N/A | Subsequently, the three levels can be expanded to three or more according to a new service or service security level subdivision. |
| Sensing privacy (Sensing Privacy) | It defines privacy requirements for different sensing services and is classified into three levels. | N/A | Subsequently, the three levels can be expanded to three or more levels according to a new service or service privacy level subdivision. |
| Detection probability | It is defined as a capability of determining whether there is a sensing target, and is assumed as a probability of determining yes in a case that the target exists. | N/A | Only applicable to some services such as a radar sensing service. |
| False alarm probability | It is defined as a capability of determining whether there is a sensing target, and is assumed as a probability of determining yes in a case that the target does not exist. | N/A | Only applicable to some services such as a radar sensing service. |
| ... | ... | ... | ... |

It should be noted herein that in this application, sensing service types (Sensing Service Type) are classified according to two main requirements: a physical function range and a sensing real-time requirement of a sensing service, and a sensing range includes two types. One type is a sensing service whose sensing physical range is greater than or equal to a first preset value, that is, a large-scale sensing (Large-scale Sensing, LSS) service, and the corresponding sensing physical range is 10 meters, 100 meters, and kilometers. The other type is a sensing service whose sensing physical range is less than the first preset value, that is, a small-scale sensing (Small-scale Sensing, SSS) service, and the corresponding sensing physical range is centimeters, decimetres, and meters. According to a sensing real-time requirement, a delay critical (Delay Critical) type is added by analogy to the definition of 5G QoS. Therefore, in this embodiment of this application, sensing service types may be classified into four types: delay critical LSS (a delay-critical sensing service whose corresponding sensing physical range is greater than or equal to the first preset value), LSS (a sensing service whose corresponding sensing physical range is greater than or equal to the first preset value), delay critical SSS (a delay-critical sensing service whose corresponding sensing physical range is less than the first preset value), and SSS (a sensing service whose corresponding sensing physical range is less than the first preset value), which are respectively represented by Sensing Service Type I-IV In other words, the sensing service type mentioned in this embodiment of this application includes at least one of the foregoing four types.

Similar to an LTE QCI, to divide QoS of different data service types, a 5G QoS identity (5G Quality Identity, 5QI) is defined in 5G, which is used to index a 5G QoS characteristic parameter. A normalized 5G QoS characteristic parameter has a standardized predefined value of each parameter and is associated with a fixed SQI value (an index for marking a series of parameters).

To define QoS characteristics of different sensing services, as shown in Table 3, sensing quality index (Sensing Quality Identity, SQI) values corresponding to different QoS are given herein. In actual use, an SQI should include at least one of parameters listed in Table 3 and a corresponding value of the parameter. For some sensing QoS characteristic parameters, a plurality of description forms may be included. For example, a sensing error may be a maximum absolute error (as shown in Table 3), or may be a maximum relative error (a percentage of an error to a real value), or may even be described by an error probability distribution.

**Table 3 Definition manner 1 of the sensing quality index SQI**

| SQI valu e | Sensing service type | Sensing priority level | Sensing delay budget | Sensing resolution | Maximum sensing range | Sensing error (maximum error) | Continuous sensing capability | Sensing update rate | Sensing signal quality | Sensing security | Sensing privacy | Detection probability | False alarm probability | Service case |
|---|---|---|---|---|---|---|---|---|---|---|---|---|---|---|
| 5 | I | 4 | 50 ms | Distance ≤3 m; Angle 1° | Distance 500 m; 180° angle | Distance 3 m; Angle 2° | Yes | Once/5 s | SNR>10 dB | Medium | Medium | ≥80% | ≤5% | Outdoor user positioning and tracing |
| 7 | | 1 | 5 ms | Distance ≤ 0.5 m; Angle 1° | Distance 100 m; Angle 180° | Distance 1 m; Angle 2° | Yes | 10 times/s | SNR>10 dB | High | Medium | ≥95% | ≤1% | V2X sensing: pedestrian detection and real-time vehicle positioning |
| | | ... | ... | ... | ... | ... | ... | ... | ... | ... | ... | ... | ... | ... |
| 1 | II | 10 | 2000 ms | Distance 10 m; Angle 2° | Distance 500 m; Angle 360° | Distance 15 m; Angle 5° | No | N/A | SNR≥5 dB | Low | Low | N/A | N/A | 3D terrain and geomorphology sensing and building surface reconstruction |
| 2 | | 11 | 300 ms | 5% | 100% | 5% | Yes | Once/min | SNR≥5 dB | Low | Low | N/A | N/A | Specific regional weather detection and forecast, humidity (relative) sensing, and PM 25 sensing |
| 3 | | 8 | 500 ms | 3 vehicles | N/A | 10 vehicles/ min | Yes | Once/min | SNR≥5 dB | Low | Low | N/A | N/A | Vehicle flow sensing |
| 4 | | 9 | 500 ms | 5 persons | N/A | 40 persons/ min | Yes | Once/5 min | SNR≥5 dB | Low | Low | N/A | N/A | Human flow sensing |
| 6 | | 5 | 500 ms | Distance 5 m | Distance 200 m | Distance 10m | Yes | 2 times/min | SNR≥5 dB | Medium | Medium | 60% | 10% | Situational sensing, such as sensing a user entering an area and automatically delivering a service push |
| | | ... | ... | ... | ... | ... | ... | ... | ... | ... | ... | ... | ... | ... |
| 8 | III | 3 | 10 ms | N/A | Distance 0.1-3 m | 0.1 m | Yes | 10 times/s | SNR>10 dB | Medium | Medium | 90% | 5% | Low-latency eMBB application augmented reality sensing, gesture, posture, and motion recognition |
| 9 | | 2 | 15 ms | N/A | Distance 3 m | N/A | Yes | 10 times/s | SNR>10 dB | High | High | N/A | N/A | Health monitoring: heartbeat/respiration sensing |
| | | ... | ... | ... | ... | ... | ... | ... | ... | ... | ... | ... | ... | ... |
| 10 | IV | 6 | 800 ms | Distance ≤ 1 cm; Angle 1° | Distance 30 cm | Distance 2 cm; Angle 2° | Yes | 60 times/s | SNR≥15 dB | Medium | Medium | N/A | N/A | Short-range sensing: scanning imaging |
| 11 | | 7 | 200 ms | Distance ≤ 5 m; Angle 5° | Distance 100m | Distance ≤ 10m; Angle 10° | No | N/A | SNR≥15 dB | High | High | N/A | N/A | Short-range sensing of the terminal: RFID/backscatter information interaction |
| ... | | ... | ... | ... | ... | ... | ... | ... | ... | ... | ... | ... | ... | ... |

Table 4 provides another example of a definition method of an SQI. A function of Table 4 is the same as that of Table 3, but the definition method is slightly different. In Table 4, sensing service types are only classified according to physical function ranges of sensing services. In this case, sensing service types (Sensing Service Type) include two types. One type is a large-scale sensing (LSS), and a corresponding sensing physical range is 10 meters, 100 meters, and kilometers. The other type is small-scale sensing (SSS), and a corresponding sensing physical range is centimeters, decimetres, and meters.

**Table 4 Definition manner 2 of the sensing quality index SQI**

| SQI value | Sensing service type | Sensing priority level | Sensing delay budget | Sensing resolution | Maximum sensing range | Sensing error (maximum error) | Continuous sensing capability | Sensing update rate | Sensing signal quality | Sensing security | Sensing privacy | Detection probability | False alarm probability | Service case |
|---|---|---|---|---|---|---|---|---|---|---|---|---|---|---|
| 5 | LSS | 4 | 50 ms | Distance ≤ 3 m; Angle 1° | Distance 500 m; 180° angle | Distance 3 m; Angle 2° | Yes | Once/5 s | SNR>10 dB | Medium | Medium | ≥80% | ≤5% | Outdoor user positioning and tracing |
| 7 | | 1 | 5 ms | Distance ≤ 0.5 m; Angle 1° | Distance 100 m; 180° angle | Distance 1 m; Angle 2° | Yes | 10 times/s | SNR>10 dB | High | Medium | ≥95% | ≤1% | V2X sensing: pedestrian detection, real-time vehicle positioning |
| 1 | | 10 | 2000 ms | Distance 10m; Angle 2° | Distance 500 m; 360° angle | Distance 15 m; Angle 5° | No | N/A | SNR≥5 dB | Low | Low | N/A | N/A | 3D terrain and geomorphology sensing and building surface reconstruction |
| 2 | | 11 | 300 ms | 5% | 100% | 5% | Yes | Once/min | SNR≥5 dB | Low | Low | N/A | N/A | Specific regional weather detection and forecast, humidity sensing, and PM 25 sensing |
| 3 | | 8 | 500 ms | 3 vehicles | N/A | 10 vehicles/min | Yes | Once/min | SNR≥5 dB | Low | Low | N/A | N/A | Vehicle flow sensing |
| 4 | | 9 | 500 ms | 5 persons | N/A | 40 persons/min | Yes | Once/5 min | SNR≥5 dB | Low | Low | N/A | N/A | Human flow sensing |
| 6 | | 5 | 500 ms | Distance 5 m | Distance 200 m | Distance 10m | Yes | 2 times/min | SNR≥5 dB | Medium | Medium | 60% | 10% | Situational sensing, such as sensing a user entering an area and automatically delivering a service push |
| | | ... | ... | ... | ... | ... | ... | ... | ... | ... | ... | ... | ... | ... |
| 8 | SSS | 3 | 10 ms | N/A | Distance 0.1-3 m | 0.1 m | Yes | 10 times/s | SNR>10 dB | Medium | Medium | 90% | 5% | Low-latency eMBB application augmented reality sensing, gesture, posture, and motion recognition |
| 9 | | 2 | 15 ms | N/A | Distance 3 m | N/A | Yes | 10 times/s | SNR>10 dB | High | High | N/A | N/A | Health monitoring: heartbeat/respiration sensing |
| 10 | | 6 | 800 ms | Distance ≤ 1 cm; Angle 1 ° | Distance 30 cm | Distance 2 cm; Angle 2° | Yes | 60 times/s | SNR≥15 dB | Medium | Medium | N/A | N/A | Short-range sensing: scanning imaging |
| 11 | | 7 | 200 ms | Distance ≤ 5 m; Angle 5° | Distance 100 m | Distance ≤ 10 m; Angle 10° | No | N/A | SNR≥15 dB | High | High | N/A | N/A | Short-range sensing of the terminal: RFID/backscatter information interaction |
| ... | | ... | ... | ... | ... | ... | ... | ... | ... | ... | ... | ... | ... | ... |

It should be noted that the foregoing SQI values are merely examples, and are not necessarily sequence number values that are finally standardized or actually used by operators. An actual use case and a sensing QoS characteristic parameter are not limited to those listed in Table 2. Table 2 and Table 3 or Table 4 in this application is mainly defined to provide a framework for defining sensing QoS for subsequent standardization and reference by communication operators.

Further, it should be noted that the sensing and communication QoS characteristic parameter in this embodiment of this application may be determined by the sending device, or may be received from another device. The following separately describes in detail the two manners of obtaining the sensing and communication QoS characteristic parameter.

Manner 1: The sending device determines the sensing and communication QoS characteristic parameter.

Optionally, in this case, an implementation that may be used in step 101 in this embodiment of this application includes:

Step 1011: The sending device obtains an integrated sensing and communication quality parameter set.

It should be noted that the integrated sensing and communication quality parameter set is a correspondence between an integrated sensing and communication quality index ISAC QI, a communication QoS characteristic parameter, and a sensing QoS characteristic parameter.

It should be further noted herein that the integrated sensing and communication quality parameter set is stipulated in a protocol or notified by a core network device.

Step 1012: The sending device receives an ISAC QI notified by a core network device or a receiving device.

Step 1013: The sending device determines the sensing and communication QoS characteristic parameter according to the ISAC QI and the integrated sensing and communication quality parameter set.

In other words, in this case, the integrated sensing and communication quality parameter set is preset, and the integrated sensing and communication quality parameter set may be represented in a form of a correspondence table. A sensing and communication service requester can know which ISAC QI a service requested by the requester corresponds to in the integrated sensing and communication quality parameter set. The sending device can determine, by searching for the integrated sensing and communication quality parameter set by using the ISAC QI, the sensing and communication QoS characteristic parameter corresponding to the ISAC QI.

It should be noted that a process and a result of a communication service are quite different from those of a sensing service. Therefore, a communication QoS characteristic parameter and a sensing QoS characteristic parameter (a measurement indicator) are very different. Most importantly, the two services in the network may not occur at the same time.

It should be noted that, in this implementation, based on communication QoS, a manner in which sensing QoS is mapped to communication QoS is added, thereby finally forming an integrated sensing and communication QoS characteristic parameter.

Data service QoS in a future B5G/6G network may need to support more differentiated services than that in the existing 5G network. Therefore, a definition of communication QoS may be more detailed and diversified than that of the existing 5G QoS. In this application, only one type of possible communication QoS is used as an example for description, and a focus is to describe a basic idea that a sensing QoS characteristic parameter is mapped to a communication QoS characteristic parameter. It is assumed that the communication QoS characteristic parameter includes: a communication service type (Communication Resource Type), a communication delay budget (Communication Packet Delay Budget), a packet error rate (Communication Packet Error Rate), a maximum data burst volume (Maximum Data Burst Volume), an averaging window (Averaging Window), and the like. Table 5 provides a method for defining an ISAC QI.

**Table 5 ISAC QI definition (integrated sensing and communication quality parameter set)**

| ISAC QI | ISAC priority level | Communication service type | Communication delay budget | Packet error rate | Maximum data burst volume | Averaging window | ... | Sensing characteristic parameter and its value (refer to Table 2 and Table 3) | Integrated sensing and communication service case (including communication and sensing service cases) | SIMI (Optional) |
|---|---|---|---|---|---|---|---|---|---|---|
| 1 | 20 | GBR | 100 ms | 10⁻² | N/A | 2000 ms | ... | {Table 3-1 SQI=1 corresponding row} | Communication: session voice; | 4 |
| | | | | | | | | | Sensing: 3D geomorphology sensing and building surface reconstruction | |
| 2 | 21 | | 100 ms | 10⁻² | N/A | 2000 ms | ... | N/A | Communication: session voice; | N/A |
| | | | | | | | | | Sensing: N/A | |
| 3 | 82 | | N/A | N/A | N/A | N/A | ... | {Table 3-1 SQI=1 corresponding row} | Communication: N/A; | N/A |
| | | | | | | | | | Sensing: 3D geomorphology sensing and building surface reconstruction | |
| 4 | 40 | | 150 ms | 10⁻³ | N/A | 2000 ms | ... | {Table 3-1 SQI=5 corresponding row} | Communication: session video (live broadcast); | 4 |
| | | | | | | | | | Sensing: outdoor user positioning and tracing | |
| 5 | 41 | | 150 ms | 10⁻³ | N/A | 2000 ms | ... | N/A | Communication: session video (live broadcast); | N/A |
| | | | | | | | | | Sensing: N/A | |
| 6 | 42 | | N/A | N/A | N/A | N/A | ... | {Table 3-1 SQI=5 corresponding row} | Communication: N/A; | N/A |
| | | | | | | | | | Sensing: outdoor user positioning and tracing | |
| ... | ... | | ... | ... | ... | ... | ... | ... | ... | ... |
| 30 | 80 | Non-GBR | 300 ms | 10⁻⁶ | N/A | N/A | ... | {Table 3-1 SQI=2 corresponding row} | Communication: Video (buffer flow) and TCP application; | 0/1/2 |
| | | | | | | | | | Sensing: specific regional weather detection and forecast, humidity sensing, and PM 25 sensing | |
| 31 | 81 | | 300 ms | 10⁻⁶ | N/A | N/A | ... | N/A | Communication: video (buffer flow) and TCP application; | N/A |
| | | | | | | | | | Sensing: N/A | |
| 32 | 83 | | N/A | N/A | N/A | N/A | ... | {Table 3-1 SQI=2 | Communication: N/A; | N/A |
| | | | | | | | | corresponding row} | Sensing: specific regional weather detection and forecast, humidity sensing, and PM 2.5 sensing | |
| 51 | 65 | | 50 ms | 10⁻² | N/A | N/A | ... | {Table 3-1 SQI=3 Corresponding row} | Communication: V2X message; | 0/2 |
| | | | | | | | | | Sensing: vehicle flow sensing | |
| 52 | 66 | | 50 ms | 10⁻² | N/A | N/A | ... | {Table 3-1 SQI=4 corresponding row} | Communication: V2X message; | 0/2 |
| | | | | | | | | | Sensing: human flow sensing | |
| 53 | 67 | | 50 ms | 10⁻² | N/A | N/A | ... | N/A | Communication: V2X message; | N/A |
| | | | | | | | | | Sensing: N/A | |
| 54 | 68 | | N/A | N/A | N/A | N/A | ... | {Table 3-1 SQI=3 Corresponding row} | Communication: N/A; | N/A |
| | | | | | | | | | Sensing: vehicle flow sensing | |
| 55 | 69 | | N/A | N/A | N/A | N/A | ... | {Table 3-1 SQI=4 corresponding row} | Communication: N/A; | N/A |
| | | | | | | | | | Sensing: human flow sensing | |
| 56 | 50 | | 300 ms | 10⁻⁶ | N/A | N/A | ... | {Table 3-1 SQI=6 corresponding row} | Communication: video (buffer flow) and TCP application; | 0/1 |
| | | | | | | | | | Sensing: situational sensing, such as sensing a user entering an area and automatically delivering a service push | |
| 57 | 51 | | 300 ms | 10⁻⁶ | N/A | N/A | ... | N/A | Communication: video (buffer flow) and TCP application; | N/A |
| | | | | | | | | | Sensing: N/A | |
| 58 | 52 | | N/A | N/A | N/A | N/A | ... | {Table 3-1 SQI=6 corresponding row} | Communication: N/A; | N/A |
| | | | | | | | | | Sensing: situational sensing, such as sensing a user entering an area and automatically delivering a service push | |
| 59 | 53 | | 300 ms | 10⁻⁶ | N/A | N/A | ... | {Table 3-1 SQI=10 corresponding row} | Communication: video (buffer flow) and TCP application; Sensing: short-range sensing (scanning imaging, etc.) | 2/3/4 |
| 60 | 54 | | 300 ms | 10⁻⁶ | N/A | N/A | ... | N/A | Communication: video (buffer flow) and TCP application; | N/A |
| | | | | | | | | | Sensing: N/A | |
| 61 | 55 | | N/A | N/A | N/A | N/A | ... | {Table 3-1 SQI=10 corresponding row} | Communication: N/A; | N/A |
| | | | | | | | | | Sensing: short-range sensing (scanning imaging, etc.) | |
| 75 | 57 | | 200 ms | 10⁻⁶ | N/A | N/A | ... | {Table 3-1 SQI=11 corresponding row} | Communication: critical task data; | 3/4 |
| | | | | | | | | | Sensing: short-range sensing of the terminal, and RFID/backscatter information interaction | |
| 76 | 58 | | 200 ms | 10⁻⁶ | N/A | N/A | ... | N/A | Communication: critical task data; Sensing: N/A | N/A |
| 77 | 59 | | N/A | N/A | N/A | N/A | ... | {Table 3-1 SQI=11 corresponding row} | Communication: N/A; | N/A |
| | | | | | | | | | Sensing: short-range sensing of the terminal, and RFID/backscatter information interaction | |
| ... | ... | | ... | ... | ... | ... | ... | ... | ... | ... |
| 80 | 5 | Delay Critical GBR | 30 ms | 10⁻⁵ | 1354 byte | 1000 ms | ... | {Table 3-1 SQI=7 corresponding row} | Communication: intelligent transportation system; | 1/3/4 |
| | | | | | | | | | Sensing: V2X sensing such as pedestrian detection and vehicle real-time positioning | |
| 81 | 6 | | 30 ms | 10⁻⁵ | 1354 byte | 1000 ms | ... | N/A | Communication: intelligent transportation system; | N/A |
| | | | | | | | | | Sensing: N/A | |
| 82 | 7 | | N/A | N/A | N/A | N/A | ... | {Table 3-1 SQI=7 corresponding row} | Communication: N/A; | N/A |
| | | | | | | | | | Sensing: V2X sensing such as pedestrian detection and vehicle real-time positioning | |
| 83 | 30 | | 10 ms | 10⁻⁶ | 1358 Byte | 2000 Ms | ... | {Table 3-1 SQI=8 corresponding row} | Communication: low-latency eMBB application augmented reality; | 3/4 |
| | | | | | | | | | Sensing: Low-latency eMBB application augmented reality sensing, gesture, posture, and motion recognition | |
| 84 | 31 | | 10 ms | 10⁻⁶ | 1358 Byte | 2000 Ms | ... | N/A | Communication: low-latency eMBB application augmented reality; | N/A |
| | | | | | | | | | Sensing: N/A | |
| 85 | 32 | | N/A | N/A | N/A | N/A | ... | {Table 3-1 SQI=8 corresponding row} | Communication: N/A; | N/A |
| | | | | | | | | | Sensing: low-latency eMBB application augmented reality sensing, gesture, posture, and motion recognition | |
| 90 | 37 | | 60 ms | 10⁻⁶ | 255 Byte | 2000 Ms | ... | {Table 3-1 SQI=9 corresponding row} | Communication: critical task delay-critical signaling (for example, MC-PTT signaling); | 4 |
| | | | | | | | | | Sensing: health monitoring: heartbeat/respiration sensing | |
| 91 | 18 | | 60 ms | 10⁻⁶ | 255 Byte | 2000 Ms | ... | N/A | Communication: critical task delay-critical signaling (for example, MC-PTT signaling); | N/A |
| | | | | | | | | | Sensing: N/A | |
| 92 | 19 | | N/A | N/A | N/A | N/A | ... | {Table 3-1 SQI=9 corresponding row} | Communication: N/A; | N/A |
| | | | | | | | | | Sensing: health monitoring: heartbeat/respiration sensing | |
| ... | ... | | ... | ... | ... | ... | ... | ... | ... | ... |

It should be noted that the communication QoS characteristic parameters listed in the foregoing table are merely examples, and do not represent that the communication QoS characteristic parameters in the future network include only these items. For a sensing-related characteristic parameter and its value, refer to Table 2 and Table 3/Table 4. In addition, for brevity, the sensing QoS characteristic parameter and its value are inserted into the second column from the right of the foregoing table by using the "sensing QoS characteristic parameter and its value (refer to Table 2 and Table 3)" as an item name. Content of the column is represented briefly by {Table 3 SQI=xxx corresponding row} (the original SQI is cancelled). For a communication QoS characteristic parameter and its value that are not listed in the table, the communication QoS characteristic parameter and its value are represented temporarily by using "... ", as shown in the third column from the right.

It should be noted that the above table uses the "ISAC priority level" instead of a "communication priority level" because a service priority level parameter in an integrated sensing and communication scenario needs to represent a priority order of both a communication service and a sensing service in the case of single existence, as well as in the case of simultaneous existence. The foregoing priority level value is only used as a reference. Generally, a priority of an integrated sensing and communication service (data communication and sensing requirements simultaneously exist) is higher than a priority of a single communication service or a single sensing service. However, the priority of the single communication service or the single sensing service depends on a specific service. It can be learned from Table 5 that the method for defining the ISAC QI is mainly based on communication QoS, and a priority of a sensing service is affected by a specific factor of coupling with which communication service. However, a sensing service and a communication service generally follow a specific matching rule. The matching rule may consider a real-time requirement of a service, that is, a sensing service corresponding to a communication service with a higher real-time requirement in the integrated sensing and communication scenario is also a service with a higher real-time requirement (for example, content related to ISAC QI=80 in Table 5). The rule of matching a sensing service and a communication service may also consider relevance of a specific service application scenario. For a sensing service that requires a plurality of mobile terminals to participate in, the sensing service may be combined with a multi-user communication service (for example, content related to ISAC QI=1 and 51 in Table 5).

It should be noted that the foregoing ISAC QI values are merely examples, and are not necessarily sequence number values that are finally standardized or actually used by operators. An actual use case and a QoS characteristic parameter are not limited to those listed in Table 5. Table 5 (with reference to Table 2 and Table 3) is mainly used to provide a framework for defining ISAC QoS for subsequent standardization and reference by communication operators. A method for mapping a sensing QoS characteristic parameter to a communication QoS characteristic parameter provided in Table 5 is clear and direct, and a QoS control process is also relatively simple. According to the foregoing ISAC QI definition, the network can conveniently establish a data flow granularity of a communication sensing service, and allocate, to each node of the network, a transmission resource and a computing resource that match the service, to implement differentiated services.

It should be noted that, the foregoing ISAC QoS definition method is equivalent to maintaining all possible communication and sensing concurrent services combinations, including a pure communication service and a pure sensing service, in a QoS table, and canceling an original communication B5QI/6G QoS identity (6G Quality Identity, 6QI) definition and a sensing SQI definition. In other words, in this case, the sensing and communication QoS characteristic parameter further includes at least one of a sensing and communication service type and a sensing and communication priority level, and the sensing and communication priority level is used to determine a resource scheduling priority of an integrated sensing and communication signal.

It should be noted that the sensing and communication service type includes at least one of the following:
B11. Delay-critical communication sensing service whose sensing physical range is greater than or equal to a second preset value.
B12. Communication sensing service whose sensing physical range is greater than or equal to the second preset value.
B13. Delay-critical communication sensing service whose sensing physical range less than the second preset value.
B14. Communication sensing service whose sensing physical range is less than the second preset value.

It should be noted that, optionally, an integrated sensing and communication implementation method indicator (Sensing Implementation Method Indicator, SIMI) may be defined to indicate an integrated sensing and communication service implementation that may be adopted by a base station or another sensing node. According to different degrees of emphasis on communication and sensing, implementations of the integrated sensing and communication service include but are not limited to the following several manners:
A. SIMI=0: It focuses on communication and uses a communication signal to achieve sensing as far as possible, but sensing QoS is difficult to be guaranteed.
B. SIMI=2: A part of communication QoS is sacrificed to satisfy sensing QoS. A dedicated sensing signal is used with a communication data signal through time division multiplexing, or frequency division multiplexing, or time division + frequency division multiplexing.
C. SIMI=4: Communication QoS and sensing QoS reach a relatively good level at the same time, and an integrated sensing and communication signal is used.
D. SIMI=1: It focuses on communication QoS while taking into account sensing QoS; and time division multiplexing is performed for A and C.
E. SIMI=3. It focuses on sensing QoS while taking into account communication QoS; and time division multiplexing is performed for B and C.

A specific communication sensing policy to be implemented may be determined by a sensing network element (sensing network function) in the network.

Optionally, in this case, another implementation that may be used in step 101 in this embodiment of this application includes:
Step 1014: The sending device obtains a sensing QoS parameter set and a communication QoS parameter set, where the sensing QoS parameter set is a correspondence between a sensing quality index SQI and a value of a sensing QoS characteristic parameter, and the communication QoS parameter set is a correspondence between a communication quality index and a value of a communication QoS characteristic parameter.

Optionally, the QoS parameter set is stipulated in a protocol or notified by a core network device, and the communication QoS parameter set may also be stipulated in the protocol or notified by the core network device.

Step 1015: The sending device receives an SQI and a communication quality index that are notified by a core network device or a receiving device.

Step 1016: The sending device obtains the sensing QoS characteristic parameter according to the SQI and the sensing QoS parameter set.

Step 1017: The sending device obtains the communication QoS characteristic parameter according to the communication quality index and the communication QoS parameter set.

Step 1018: The sending device determines the sensing QoS characteristic parameter and the communication QoS characteristic parameter as the sensing and communication QoS characteristic parameter.

In other words, in this case, the sensing QoS characteristic parameter and the communication QoS characteristic parameter are separately determined by using the sensing QoS parameter set and the communication QoS parameter set, and the two QoS characteristic parameters are combined as the sensing and communication QoS characteristic parameter.

In this case, the communication QoS characteristic parameter and the sensing QoS characteristic parameter are separately maintained, and two QoS mapping relationships are separately established, so as to finally form the sensing and communication QoS characteristic parameter.

A difference between this implementation and the foregoing another implementation lies in that the ISAC QoS does not need to be directly defined, but two sets of communication and sensing QoS systems are used and maintained at the same time. Two types of QoS are linked together by an additional defined service mapping relationship. To reduce network signaling overheads, this newly added service mapping relationship may be indicated by using an integrated sensing and communication service mapping index (ISAC Mapping Index, ISAC MI).

When there is only a communication service or a sensing service, the network only needs to separately refer to communication QoS or sensing QoS for a differentiated communication/sensing service.

When one or more communication services are concurrent with one or more sensing services (a quantity of communication services and a quantity of sensing services that are concurrent are not necessarily equal), the network first determines, according to communication QoS and sensing QoS, whether the communication service and the sensing service currently satisfy an integrated sensing and communication condition, and determines a communication and sensing policy that needs to be adopted.

After receiving a communication service request and a sensing service request, the network can determine a B5QI/6QI value according to a communication service type and a communication QoS definition; and can determine an SQI value according to a sensing service type and a sensing QoS definition (refer to the above "sensing QoS definition"). In the two processes, transmission resource configurations respectively required by the communication service and the sensing service are determined. Then, a sensing network element (sensing network function) needs to further determine two service mapping manners according to the communication service type and the sensing service type, and give an ISAC MI value. If the two services can be mapped, the sending device may send an integrated sensing and communication signal. If the two services cannot be mapped, the sending device needs to separately send a communication signal and a sensing signal. Table 6 provides a possible mapping relationship between a communication service and a sensing service and a corresponding ISAC MI value.

**Table 6 Mapping relationship between a communication service and a sensing service and an ISAC MI value**

| ISAC MI (ISAC QI) | B5QI/6QI | Communication service instance | SQI | Sensing service instance | SIMI (Optional) |
|---|---|---|---|---|---|
| 1 | 1 | Session voice | 1 | 3D terrain and geomorphology sensing and building surface reconstruction | 4 |
| 2 | | | 5 | Outdoor user positioning and tracing | 4 |
| 3 | | | ... | ... | ... |
| 4 | 2 | Session video (live broadcast) | 5 | Outdoor user positioning and tracing | 4 |
| 5 | | | 1 | 3D terrain and geomorphology | 4 |
| | | | | sensing and building surface reconstruction | |
| 6 | | | ... | ... | ... |
| 7 | 60 | Video (buffer flow) and TCP application | 6 | Situational sensing, such as sensing a user entering an area and automatically delivering a service push | 0/1 |
| 8 | | | 10 | Short-range sensing (scanning imaging and the like) | 2/3/4 |
| 9 | | | 2 | Specific regional weather detection and forecast, humidity sensing, PM 2.5 sensing | 0/1/2 |
| 10 | | | ... | ... | ... |
| 11 | 79 | V2X message | 3 | Vehicle flow sensing | 0/2 |
| 12 | | | 4 | Human flow sensing | 0/2 |
| 13 | | | ... | ... | ... |
| 14 | 70 | Critical task data | 11 | Short-range sensing of the terminal, and RFID/backscatter information interaction | 3/4 |
| 15 | | | ... | ... | ... |
| 16 | 84 | Intelligent traffic system | 7 | V2X sensing such as pedestrian detection, real-time vehicle positioning | 1/3/4 |
| 17 | | | ... | ... | ... |
| 18 | 80 | Low-latency eMBB application augmented reality | 8 | Low-latency eMBB application augmented reality sensing, gesture, posture, and motion recognition | 3/4 |
| 19 | | | ... | ... | ... |
| 20 | 69 | Critical task delay-critical signaling (for example, MC-PTT signaling) | 9 | Health monitoring: heartbeat/respiration sensing | 4 |
| 21 | | | ... | ... | ... |
| 22 | 5 | IMS signaling | | Reserved | |
| 23 | 7 | Voice, video (live broadcast), and interactive game | | Reserved | |
| ... | ... | ... | ... | ... | ... |

It can be learned from Table 6 that one communication service may be matched with a plurality of sensing services to implement integrated sensing and communication, and one sensing service may be matched with a plurality of communication services, for example, a relationship between the foregoing two communication services: session voice and session video (live broadcast) and two sensing services in 3D terrain sensing, building surface reconstruction, outdoor user positioning, and tracking. Table 6 provides only a possible SIMI value. A possible manner may focus on communication QoS, or may focus on sensing QoS. It should be noted that whether the network uses the SIMI value is determined by operators, that is, this parameter is optional.

In other words, in this case, the sensing and communication QoS characteristic parameter further includes at least one of a sensing service type, a sensing priority level, a communication service type, and a communication priority level, where the communication priority level is used to determine a resource scheduling priority of a communication signal; and the sensing priority level is used to determine a resource scheduling priority of a sensing signal.

It should be noted that the communication service type includes at least one of the following:
B21. Guaranteed bit rate communication service.
B22. Non-guaranteed bit rate communication service.
B23. Guaranteed bit rate delay-critical communication service.

In implementation 2, based on the original communication QoS and the sensing QoS, a mapping between a communication B5QI/6QI and a sensing SQI is added, which has the advantage of simple maintenance. When new communication service or sensing service QoS needs to be defined, corresponding QoS may be directly modified, and a mapping relationship shown in Table 6 is updated. In addition, a degree of freedom is given to an RAN side.

Manner 2: Another device notifies the sensing and communication QoS characteristic parameter.

Optionally, in this case, an implementation of step 101 in this embodiment of this application includes:
receiving, by the sending device, first information sent by a core network device or a receiving device, where
the first information indicates the sensing and communication QoS characteristic parameter.

In other words, in this case, the sensing and communication QoS characteristic parameter does not need to be determined by the sending device, but may be directly obtained from another device. Optionally, in a case that the sending device is a base station, the sensing and communication QoS characteristic parameter may be directly notified by the core network device to the base station. In a case that the sending device is a terminal, the sensing and communication QoS characteristic parameter is generally notified by the base station to the terminal. Optionally, the base station may be used as a receiving device of a sensing signal. In this case, the sensing and communication QoS characteristic parameter of the base station may be notified by the core network device, or may be determined by the base station by using the ISAC QI and the integrated sensing and communication quality parameter set in the foregoing manner.

It should be noted that, an implementation of the first information is that the first information carries the sensing and communication QoS characteristic parameter. Alternatively, it may be simply understood as that the first information is the sensing and communication QoS characteristic parameter.

Optionally, after determining to obtain the sensing and communication QoS characteristic parameter, the sending device may determine sensing and communication parameter configuration information according to the sensing and communication QoS characteristic parameter; and then send a first signal to a receiving device according to the sensing and communication parameter configuration information. Correspondingly, after obtaining the sensing and communication QoS characteristic parameter, the receiving device also determines the sensing and communication parameter configuration information according to the sensing and communication QoS characteristic parameter, and further receives the first signal by using the sensing and communication parameter configuration information. It should be noted that, sending and receiving of the first signal are implemented in this manner, thereby ensuring transmission accuracy of the first signal.

It should be noted that the foregoing first signal includes at least one of the following: a sensing signal, a communication signal, and an integrated sensing and communication signal.

Optionally, the sensing and communication parameter configuration information mentioned in this embodiment of this application includes but is not limited to at least one of the following:
C11. Bandwidth of the first signal.
C12. Quantity of transmit antennas of the first signal.
C 13. Transmit power of the first signal.
C14. Period of the first signal.
C15. Quantity of pulses of the first signal.

Optionally, to implement accurate measurement on a sensing signal, this embodiment of this application further includes:
determining, by the sending device, a measurement quantity of a first signal according to the sensing and communication QoS characteristic parameter; and
sending, by the sending device, the measurement quantity to a receiving device.

Correspondingly, after obtaining the measurement quantity of the first signal, the receiving device measures the first signal according to the measurement quantity to determine a measurement value corresponding to the measurement quantity. It should be noted that the receiving device may directly receive the measurement quantity sent by the sending device, or may determine the measurement quantity of the first signal according to the sensing and communication QoS characteristic parameter.

It should be further noted that, to successfully send the first signal, the sending device should further understand which devices participate in this integrated sensing and communication service. Specifically, this embodiment of this application further includes one of the following:

D11. The sending device receives a sending device and a receiving device that are sent by a core network device or a receiving device and that participate in sensing and communication.

It should be noted that the core network device may determine, by using the sensing and communication QoS characteristic parameter, the sending device and the receiving device that participate in sensing and communication. In a case that the sending device is a base station, the core network device may directly send the sending device and the receiving device that participate in sensing and communication to the base station. In a case that the sending device is a terminal and the receiving device is a base station, the core network device needs to first send the sending device and the receiving device that participate in sensing and communication to the receiving device, and then the receiving device sends the sending device and the receiving device that participate in sensing and communication to the sending device.

D12. The sending device determines, according to the sensing and communication QoS characteristic parameter, the sending device and the receiving device that participate in sensing and communication.

Optionally, in a case, the sending device and the receiving device that participate in sensing and communication may be a quantity of sending devices and receiving devices that participate in sensing and communication.

It should be further noted that, to ensure that the sending device can accurately send the first signal, the sending device should further obtain a service sensing manner, where the sensing manner is used to indicate a receive end and a transmit end of the first signal, and send the first signal in the sensing manner. Optionally, the sensing manner may be obtained by the core network device according to the sensing and communication QoS characteristic parameter and sent to the sending device, or may be obtained by the core network device according to the sensing and communication QoS characteristic parameter and sent to the receiving device, and then sent by the receiving device to the sending device; or the sensing manner may be determined by the sending device according to the sensing and communication QoS characteristic parameter.

It should be noted that different sensing manners indicate different receive ends and transmit ends of the first signal. In other words, a sensing manner is associated with an entity that receives or sends the first signal. Specifically, for example, the first signal is an integrated sensing and communication signal. A relationship between an entity corresponding to the sensing manner and a signal to be sent or received includes at least one of the following:

E11. A first network node sends an integrated sensing and communication signal, and a second network node receives the integrated sensing and communication signal.

In this case, a base station A sends an integrated sensing and communication signal, and a base station B receives the integrated sensing and communication signal.

E12. A first network node sends and receives an integrated sensing and communication signal.

In this case, a base station A sends an integrated sensing and communication signal, and the base station A receives the integrated sensing and communication signal.

E13. A first network node sends an integrated sensing and communication signal, and a terminal device associated with the first network node receives the integrated sensing and communication signal.

In this case, a base station A sends an integrated sensing and communication signal, and the terminal receives the integrated sensing and communication signal.

E14. A first terminal device sends an integrated sensing and communication signal, and a second terminal device receives the integrated sensing and communication signal.

In this case, a terminal A sends an integrated sensing and communication signal, and a terminal B receives the integrated sensing and communication signal.

E15. A first terminal device sends and receives an integrated sensing and communication signal.

In this case, a terminal A sends an integrated sensing and communication signal, and the terminal A receives the integrated sensing and communication signal.

E16. A first terminal device sends an integrated sensing and communication signal, and a first network node receives the integrated sensing and communication signal.

In this case, a terminal A sends an integrated sensing and communication signal, and a base station A receives the integrated sensing and communication signal.

Generally, to quickly determine, according to the sensing and communication QoS characteristic parameter, to obtain the sensing and communication parameter configuration information, the measurement quantity, the sensing manner, and the sending device and the receiving device that participate in sensing and communication, in this embodiment of this application, a correspondence table between the sensing and communication QoS characteristic parameter and the sensing and communication parameter configuration information, the measurement quantity, the sensing manner, and the sending device and the receiving device that participate in sensing and communication may be established. When one of the items needs to be obtained, only corresponding data needs to be obtained by querying the table. Generally, the sensing and communication QoS characteristic parameter may include a value combination of a plurality of parameters in Table 5, and each value combination corresponds to one ISAC QI in Table 5. In other words, the sensing and communication QoS characteristic parameter corresponds to the ISAC QI. In this application, a correspondence table between the ISAC QI and the sensing and communication parameter configuration information, the measurement quantity, the sensing manner, and the sending device and the receiving device that participate in sensing and communication is established, and the corresponding sensing and communication parameter configuration information, the measurement quantity, the sensing manner, and the sending device and the receiving device that participate in sensing and communication are obtained by querying the table according to the ISAC QI corresponding to the sensing and communication QoS characteristic parameter.

It should be noted that according to several ISAC QI values and sensing and communication service types defined in Table 5, Table 7 provides corresponding parameter configuration and sensing manner suggestions.

**Table 7 ISAC QI value and sensing and communication parameter configuration and sensing manner corresponding to a sensing and communication service type**

| ISAC QI value | Sensing node | Parameter configuration | Sensing measurement quantity | Sensing manner | Notes |
|---|---|---|---|---|---|
| 1 | Outdoor multi-macro base station + multi-mobile terminal | Bandwidth 100/400 MHz and 64 antennas; 100 terminals cooperating with sensing and transmit power ≥ 25 dBm | Multi-path angle of arrival, multi-path angel of departure, and multi-path delay | A base station sends and receives a sensing signal, or a base station A sends and a base station B receives a sensing signal, or a base station and a user terminal send/receive a sensing signal. | A base station near a sensing map needs to perform sensing. If the base station sends and receives a sensing signal, or the base station A sends and the base station B receives a sensing signal, the mobile terminal does not need to cooperate. Otherwise, a user near the map needs to cooperate with sensing. The base station can use a higher configuration parameter as required. |
| 2. 6 | Outdoor multi-macro base station | Bandwidth=20 MHz, antennas≥1, and transmit power≥25 dBm | RSRP | A base station A sends and a base station B receives a sensing signal, or a base station and a user terminal send/receive a sensing signal. | A base station near a sensing area needs to perform sensing without cooperation of the terminal. |
| 3. 4 | Outdoor single macro base station and indoor small cell | Bandwidth 20/100 MHz, antennas≥1, 50 sensing signal pulses, and sensing signal period 10 ms | RSRP; or delay and Doppler | A base station sends and receives a sensing signal, or a base station A sends and a base station B receives a sensing signal. | When an RSRP scheme is used, a bandwidth is not required. In a delay-Doppler spectrum measurement scheme, a sensing signal bandwidth needs to be configured. |
| 5 | Outdoor single macro base station | Bandwidth 100/400 MHz, antennas≥64, 100 sensing signal pulses, and sensing signal period 5 ms | LOS diameter angle, angel of departure, delay, and Doppler frequency | A base station sends and receives a sensing signal, or a base station A sends and a base station B receives a sensing signal. | A bandwidth 100 MHz corresponds to a distance resolution 3 m, and a bandwidth 400 MHz corresponds to a distance resolution 0.75 m; and a sensing signal period 5 ms corresponds to a perceivable target speed ≤ 30 km/h. |
| 7 | Outdoor single macro base station and small cell | Bandwidth=800 MHz, antennas≥64, 100 sensing signal pulses, and sensing signal period 1 ms | LOS diameter angle, angel of departure, delay, and Doppler frequency | A base station sends and receives a sensing signal, or a base station and a user terminal send/receive a sensing signal. | A bandwidth 800 MHz corresponds to a distance resolution 0.375 m; and a sensing signal period 1 ms corresponds to a perceivable target speed ≤ 150 km/h. |
| 8. 9 | Indoor small cell and Wi-Fi | Bandwidth=20/40/80/160 MHz, 2/3/4/8 antennas, 100 sensing signal pulses, and sensing signal period 1 ms | RSRP; or LOS diameter angle, angel of departure, delay, and Doppler frequency | A base station sends and receives a sensing signal. | |
| 10, 11 | Mobile terminal and dedicated sensing terminal | Bandwidth=100/400/800 MHz/2 GHz, and antennas≥4 | LOS diameter angle, angel of departure, and delay | A base station sends and receives a sensing signal. | |
| ... | ... | ... | ... | ... | ... |

Further, it should be noted that an implementation of sending the first signal by the sending device in this embodiment of this application may be:
mapping, by the sending device, the first signal to a radio bearer RB according to a target mapping rule; and
sending, by the sending device, the first signal to the receiving device through the RB, where
the target mapping rule includes at least one of the following:
   a plurality of first signals are mapped to a same RB; and
   one first signal is mapped to one RB.

Correspondingly, the receiving device also receives the first signal in a same manner.

It should be noted that the RB includes at least one of a signaling radio bearer (SRB) and a data radio bearer (DRB).

It should be noted that, in a 5G system, a definition of a QoS characteristic parameter may be used as a basis for dividing a QoS Flow of a data service by a core network to implement QoS Flow mapping control. A QoS characteristic parameter QoS Profile used by a gNB is allocated by a session management function (Session Management Function, SMF), and a SQI value in 5G is included in a parameter set QoS configuration (QoS Profile) of a core network. In this application, a sensing QoS parameter is allocated to the gNB by a sensing network function unit/sensing network element (Sensing Network Function, SNF). Since LTE/5G QoS is designed for data service transmission, a QoS usage and control procedure thereof may be quite different from that of sensing QoS.

Optionally, when only there is a sensing service in the network, data transmission is not involved. A sensing signal (sequence/waveform) may be a pseudo-random sequence, such as an m sequence or a Gold sequence. Because end-to-end data information transmission is not involved, the sensing signal may be stored in each sensing node (for example, an outdoor macro base station, an indoor small cell, a dedicated sensing terminal, and a mobile terminal), and is directly invoked when a sensing function is triggered, or is directly generated through computing according to a local sensing signal sequence generation algorithm and is sent to complete sensing. In this case, an NAS layer does not need to perform QoS Flow mapping on sensing data.

Because a sensing signal needs to pass through a wireless air interface, a mapping relationship between an SQI and a radio bearer (Radio Bearer, RB) needs to be defined. In addition, because a sensing service involves air interface signaling interaction and sensing data reception and sending, both an SRB and a DRB are required for support. Sensing signaling is carried by using the SRB, and a sensing signal data is carried by using the DRB. The mapping between the SQI and the RB may be multiple-to-one, or may be one-to-one. Sensing QoS Flow may use the SRB and the DRB alone. A rule for mapping sensing QoS Flow to the DRB may be determined by an SDAP layer according to the SQI. Table 8 is based on several typical sensing services summarized in Table 1 above and the SQI values defined in Table 3.

**Table 8 Possible manner of mapping a sensing QoS Flow to a DRB**

| DRB ID | SQI | Sensing service type |
|---|---|---|
| 1 | {1,2} or a subset thereof | II |
| 2 | {3, 4, 5, 6} or a subset thereof | I/II |
| 3 | {7} | I |
| 4 | {8, 9} or a subset thereof | III |
| 5 | {10} | IV |
| 6 | {11} | IV |

Optionally, when a communication service and a sensing service are concurrent, only an integrated sensing and communication scenario is considered in this case. In one case, a base station or another possible sensing node inserts, into a data flow, sensing signal data that is prestored or generated by the base station by means of computing, and a communication data signal is sent through time division/frequency division multiplexing. In this case, it may be considered as a primary integrated sensing and communication scenario. Because the sensing signal data does not involve end-to-end transmission, an NAS layer maps a data IP flow to a QoS flow only according to an ISAC QoS characteristic parameter/a communication QoS characteristic parameter (by using the foregoing two ISAC QI definition methods), and the two types of service data at an AS layer share a same SRB and a same DRB.

In most cases, a data flow is integrated sensing and communication data. Similar to an NR network, an NAS layer of a further B5G/6G network maps IP Flows with a same ISAC QoS requirement to a same QoS Flow. The base station or the another sensing node maps the QoS Flow to a DRB, so that an RAN side adapts to the QoS requirement. In this way, two levels of mapping are formed, so that there is a degree of freedom on the RAN side. For example, the base station may convert M QoS flows into N DRBs (M≥N) according to a specific policy.

In a special case, when a plurality of data services and sensing services are concurrent, a matching QoS requirement cannot be found for all sensing services in a defined ISAC QoS parameter set, that is, some data services are transmitted separately as one QoS flow, or some sensing services separately use radio bearers. In this case, a sensing dedicated DRB needs to be separately used based on an SQI/sensing QoS parameter set.

The following uses examples to describe specific application cases in actual application.

Specific application case 1: A sensing network element sends a sensing and communication QoS characteristic parameter (that is, an ISAC QoS characteristic parameter) to perform 3D map sensing and communication.

It is assumed that a third-party (that is, a network (including an access network and a core network) or a third party other than a user) sensing application requests the network to perform 3D map sensing on an area by using an outdoor macro base station. For example, a third-party application server initiates a sensing request to a sensing network function unit/sensing network element (Sensing Network Function, SNF) or another network function unit/network element in the core network, and the sensing network element notifies a plurality of base stations near a sensing map to perform a sensing operation. A sensing manner may be that a base station sends and receives an integrated sensing and communication signal and performs sensing computing processing, or a base station A may transmit an integrated sensing and communication signal, and a base station B receives the integrated sensing and communication signal and performs sensing computing processing, or a mobile phone terminal may send an integrated sensing and communication signal, and a base station receives the integrated sensing and communication signal and performs sensing computing processing.

When the base station performs sending and receiving or the base station A performs sending and the base station B performs receiving, a network device involved in this case is shown in FIG. 2. A main implementation process in this case includes:
(1) A third-party sensing application server may send a sensing and communication QoS characteristic parameter or a sensing and communication service request to a sensing network element.

If the sensing and communication QoS characteristic parameter is directly sent, and the sensing and communication QoS characteristic parameter and the sensing service are standardized, the third-party sensing application server may directly send an ISAC QI value (or the sensing and communication QoS characteristic parameter including the ISAC QI) to a sensing node base station, and the base station may directly determine a sensing and communication service type and a sensing and communication parameter configuration of the sensing node according to the ISAC QI value (or the sensing and communication QoS characteristic parameter including the ISAC QI), so that the sensing node schedules a sensing resource and a computing resource to perform sensing processing, thereby improving flexibility and reducing signaling overheads. If the sensing and communication QoS characteristic parameter is an operator-specific sensing and communication QoS characteristic parameter, a specific parameter set needs to be transmitted between network nodes. An integrated sensing and communication quality parameter set is forwarded by the sensing network element to the corresponding sensing node. In this example, a base station that meets a sensing condition (including a sensing capability and can provide a parameter configuration that meets a sensing requirement) in a 3D map area includes two nodes: a base station A and a base station B, and the two nodes may be a single base station or may be a plurality of base stations. If only the third-party sensing application server sends the sensing and communication service request to the sensing network element, the sensing network element may also determine, according to the sensing and communication service request, a QoS parameter corresponding to the sensing and communication service, and deliver the integrated sensing and communication quality parameter set to the corresponding sensing node.

(2) The sensing network function/sensing network element may be a separate function/physical entity, or may be deployed on a common server of the core network as one of core network functions, or may be deployed on the base station side as one of functions of the base station. Finally, in this case, the third-party sensing application server may directly send the sensing and communication service request/sensing and communication QoS characteristic parameter to the base station, for example, the ISAC QI or the operator-defined integrated sensing and communication quality parameter set.

(3) When a sensing request initiator is the core network, a usage of the sensing and communication QoS characteristic parameter is the same as the foregoing, but the third-party sensing application server becomes the core network.

(4) When a sensing service initiator is a base station or a mobile terminal, the base station/mobile terminal may send the integrated sensing and communication quality parameter set to the sensing network element, and forward the integrated sensing and communication quality parameter set to the corresponding sensing node through the sensing network element. The base station/mobile terminal may also directly send the sensing and communication service request, and the sensing network element determines, according to the sensing and communication service request, the sensing and communication QoS characteristic parameter corresponding to the sensing and communication service, and delivers the integrated sensing and communication quality parameter set to the corresponding sensing node.

When an integrated sensing and communication signal is sent/received between the base station and the mobile user terminal to implement sensing of environment information and 3D map generation, or a sensing process requires cooperation of the mobile terminal, the sensing network element needs to deliver the integrated sensing and communication quality parameter set (or a sensing QoS characteristic parameter including the foregoing parameter) to the mobile terminal through the RAN side, and the mobile terminal cooperating with the sensing and communication service performs a corresponding sensing and communication parameter configuration according to the integrated sensing and communication quality parameter set. The mobile terminal maps an integrated sensing and communication QoS flow to a radio resource at an SDAP layer based on an RRC reconfiguration (Reconfiguration) message of the base station.

Specific application case 2: A sensing network element sends an ISAC QoS characteristic parameter to perform V2X sensing/communication sensing.

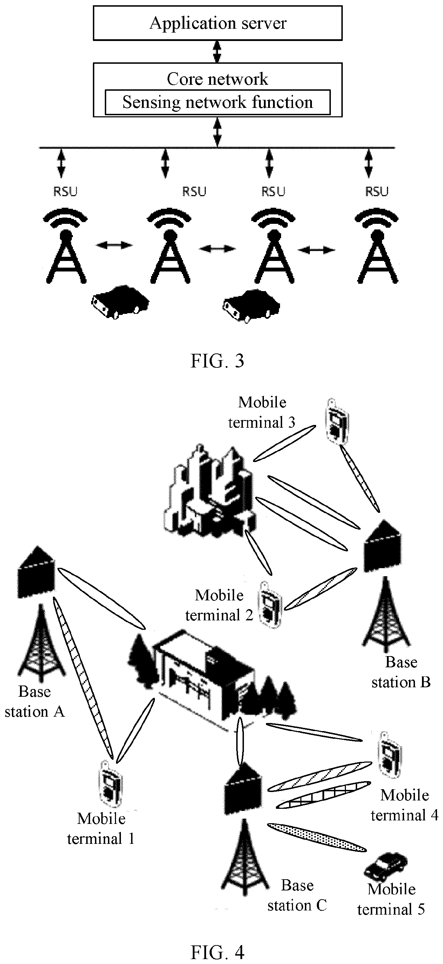

As shown in FIG. 3, an integrated sensing and communication scenario in V2X is considered: a vehicle user, a pedestrian, driving communication, and sensing. The vehicle user needs to sense a road near the vehicle user, a roadside pedestrian, and a driving location and speed by using a sensing and communication system or a roadside base station unit (Road Side Unit, RSU). In this scenario, an ultra-reliable and low latency requirement needs to be met. Therefore, latency tolerance is lower than that in 3D map generation and weather detection, and a priority is higher than that of most sensing services. The vehicle user may be an ordinary user without a sensing system, and completely relies on the RSU for sensing; or may be equipped with an integrated sensing and communication system or a sensing and communication system, and can exchange information with the RSU. The RSU is a roadside micro base station/small cell, and has a sensing capability and a sensing resource.

When the vehicle user needs to perform pedestrian traffic sensing through the RSU, the vehicle user sends an ISAC QoS characteristic parameter or a sensing and communication service request to the nearby RSU. If the ISAC QoS characteristic parameter is directly sent, and the ISAC QoS characteristic parameter and the sensing and communication service are standardized, the vehicle user may directly send an ISAC QI value to the nearest sensing node RSU. The nearby RSU forwards the ISAC QI to the sensing network element, and the sensing network element may directly determine, according to the ISAC QI value, a communication service type and a sensing service type, determine which RSUs participate in sensing, a quantity of RSUs that participate in sensing processing, and a sensing and communication parameter configuration of each sensing node, so that the sensing node schedules a sensing and communication resource and a computing resource to perform sensing processing, thereby improving flexibility and reducing signaling overheads. If the ISAC QoS characteristic parameter is an operator-specific ISAC QoS characteristic parameter, a specific integrated sensing and communication quality parameter set needs to be transmitted between network nodes. The sensing network element delivers the integrated sensing and communication quality parameter set to an RSU (mainly an RSU within a specific range of the vehicle user) that meets a sensing condition. The RSU determines a sensing manner according to the integrated sensing and communication quality parameter set, configures a sensing and communication parameter, and schedules a time-frequency resource, a computing resource, and the like that meet the sensing requirement. After sensing computing is completed, the RSU reports a sensing result to the sensing network element in real time, and the sensing network element sends the sensing result to the vehicle user to provide a real-time sensing result. If only the vehicle user sends the sensing and communication service request to the sensing network element, the sensing network element may also determine, according to the sensing and communication service request, the sensing and communication QoS characteristic parameter corresponding to the sensing and communication service, and deliver the integrated sensing and communication quality parameter set to the corresponding sensing node RSU.

The foregoing usage of the integrated sensing and communication quality parameter set is also applicable to a case that the vehicle user has a sensing capability. After the sensing and communication service request is initiated, the vehicle user performs sensing and communication parameter configuration and sensing and communication processing, and finally obtains a comprehensive sensing result with reference to the RSU sensing result.

The sensing request initiator may also be a third-party application server, and the third-party sensing application server may send a sensing ISAC QoS characteristic parameter or a sensing and communication service request to the sensing network element. The RSU may directly determine, according to the ISAC QI, an integrated sensing and communication service type and a sensing and communication parameter configuration of an integrated sensing and communication node, so that the sensing node schedules a sensing communication resource and a computing resource to perform sensing processing, thereby improving flexibility and reducing signaling overheads.

Specific application case 3: Mapping of integrated sensing and communication data to a DRB in concurrent integrated sensing and communication services.

Concurrent 3D map reconstruction and weather detection in an area are considered. For 3D map reconstruction, a session service volume is relatively large in a current period, and therefore meets an integrated sensing and communication scenario. However, for weather detection, because a network video (a buffer flow)/transmission control protocol (Transmission Control Protocol, TCP) application service flow is less (limited) in the current period, a dedicated sensing signal needs to be used for sensing. An integrated sensing and communication signal needs to be sent and received between the base station and the mobile terminal to complete communication sensing.

For a base station in a sensing area, other integrated sensing and communication services may also be concurrent. For example, for a mobile user in an area, a session video (live broadcast) service is being performed. In this case, a live application party just wants to obtain a live broadcast location of the user, that is, accurately locate the user. In addition, an intelligent transportation system in an area near the user is performing communication and real-time speed and trajectory sensing on the vehicle. An entire sensing scenario is shown in FIG. 4.

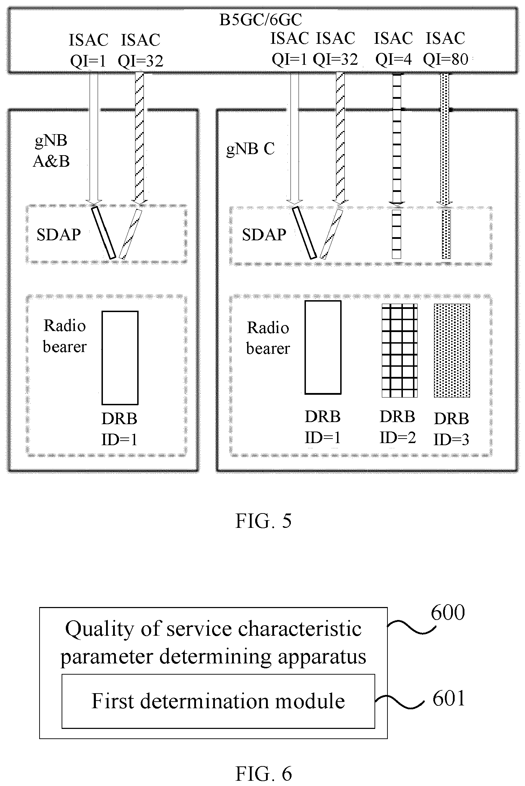

For 3D map reconstruction and weather detection, a real-time requirement is generally low, and duration of integrated sensing and communication is relatively long. The two integrated sensing and communication services may use a same sensing manner. For example, many mobile terminals in a sensing area cooperate with a base station to send a sensing signal/an integrated sensing and communication signal on an uplink, and the base station or the sensing network element performs a sensing operation to obtain environment information. In this case, the base station may configure a proper radio bearer parameter and a transmission resource configuration parameter for the service according to the two similar ISAC QoS characteristic parameters, and transmit integrated sensing and communication data of the two services on a same logical channel, that is, implement multi-to-one mapping from an integrated sensing and communication flow to a radio bearer. In addition, for some base stations in the area, other integrated sensing and communication services may also be concurrent. As shown in FIG. 4, a base station C further needs to perform communication and positioning sensing on a mobile terminal 4 (pedestrian), and perform real-time communication and speed and trajectory sensing on a mobile terminal 5 (road vehicle). Because real-time requirements, sensing distances, and the like of the two integrated sensing and communication services are different from those of the foregoing 3D map reconstruction and weather sensing services, the base station needs to separately schedule transmission resources of different levels to carry the two services. As shown in FIG. 5, for a base station A and a base station B, mapping of the integrated sensing and communication QoS Flow to the DRB for two types of sensing data of 3D map reconstruction (ISAC QI=1) and weather sensing (ISAC QI=32) is many-to-one (mapped to DRB ID=1), and mapping of the integrated sensing and communication QoS Flow to the DRB for pedestrian positioning sensing (ISAC QI=4) and real-time vehicle speed and trajectory sensing (ISAC QI=80) is one-to-one (respectively mapped to a DRB ID=2 and a DRB ID=3).

It should be noted that, because there are many types of sensing services at present, a sensing manner and a sensing measurement quantity are also different for different types of sensing services. In an integrated sensing and communication scenario, network communication and sensing efficiency are low, and sensing-related signaling overheads are huge. In this application, a specific mapping relationship between a sensing requirement and sensing processing is determined by classifying and quantizing sensing requirements and sensing services and defining QoS of different integrated sensing and communication services, so that sensing processing (a transmit end configures a sensing signal format and a parameter, and a receive end determines processing precision and a sensing computing resource) of each sensing node can meet an integrated sensing and communication QoS requirement, and finally, a network integrated sensing and communication function is more efficient and more flexible.

It should be noted that, the quality of service characteristic parameter determining method provided in the embodiments of this application may be performed by a quality of service characteristic parameter determining apparatus, or a control module that is in the quality of service characteristic parameter determining apparatus and that is configured to perform the quality of service characteristic parameter determining method. In the embodiments of this application, an example in which the quality of service characteristic parameter determining apparatus performs the quality of service characteristic parameter determining method is used to describe the quality of service characteristic parameter determining apparatus provided in the embodiments of this application.

As shown in FIG. 6, an embodiment of this application provides a quality of service characteristic parameter determining apparatus 600, applied to a sending device and including:
a first determining module 601, configured to determine a sensing and communication quality of service QoS characteristic parameter, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

Optionally, the first determining module 601 includes:
a first obtaining unit, configured to obtain an integrated sensing and communication quality parameter set, where the integrated sensing and communication quality parameter set is a correspondence between an integrated sensing and communication quality index ISAC QI, a communication QoS characteristic parameter, and a sensing QoS characteristic parameter;
a first receiving unit, configured to receive an ISAC QI notified by a core network device or a receiving device; and
a first determining unit, configured to determine the sensing and communication QoS characteristic parameter according to the ISAC QI and the integrated sensing and communication quality parameter set.

Optionally, the integrated sensing and communication quality parameter set is stipulated in a protocol or notified by the core network device.

Optionally, the first determining module 601 includes:
a second obtaining unit, configured to obtain a sensing QoS parameter set and a communication QoS parameter set, where the sensing QoS parameter set is a correspondence between a sensing quality index SQI and a value of a sensing QoS characteristic parameter, and the communication QoS parameter set is a correspondence between a communication quality index and a value of a communication QoS characteristic parameter;
a second receiving unit, configured to receive an SQI and a communication quality index that are notified by a core network device or a receiving device;
a third obtaining unit, configured to obtain the sensing QoS characteristic parameter according to the SQI and the sensing QoS parameter set;
a fourth obtaining unit, configured to obtain the communication QoS characteristic parameter according to the communication quality index and the communication QoS parameter set; and
a second determining unit, configured to determine the sensing QoS characteristic parameter and the communication QoS characteristic parameter as the sensing and communication QoS characteristic parameter.

Optionally, the first determining module 601 includes:
a third receiving unit, configured to receive first information sent by a core network device or a receiving device, where the first information indicates the sensing and communication QoS characteristic parameter.

Optionally, the sensing and communication QoS characteristic parameter further includes at least one of a sensing and communication service type and a sensing and communication priority level; or the sensing and communication QoS characteristic parameter further includes at least one of a sensing service type, a sensing priority level, a communication service type, and a communication priority level, where
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

Optionally, the sensing service type includes at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

Optionally, the communication service type includes at least one of the following:
a guaranteed bit rate communication service;
a non-guaranteed bit rate communication service; and
a guaranteed bit rate delay-critical communication service.

Optionally, the sensing and communication service type includes at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

Optionally, after the first determining module 601 determines the sensing and communication quality of service QoS characteristic parameter, the apparatus further includes:
a second determining module, configured to determine sensing and communication parameter configuration information according to the sensing and communication QoS characteristic parameter; and
a second sending module, configured to send a first signal to a receiving device according to the sensing and communication parameter configuration information, where
the sensing and communication parameter configuration information includes at least one of the following:
   a bandwidth of the first signal;
   a quantity of transmit antennas of the first signal;
   a transmit power of the first signal;
   a period of the first signal; and
   a quantity of pulses of the first signal, where
   the first signal includes at least one of the following: a sensing signal, a communication signal, and an integrated sensing and communication signal.

Optionally, the second sending module includes:
a first mapping unit, configured to map the first signal to a radio bearer RB according to a target mapping rule; and
a first sending unit, configured to send the first signal to the receiving device through the RB, where
the target mapping rule includes at least one of the following:
   a plurality of first signals are mapped to a same RB; and
   one first signal is mapped to one RB.

Optionally, the apparatus further includes:
a third determining module, configured to determine a measurement quantity of a first signal according to the sensing and communication QoS characteristic parameter; and
a third sending module, configured to send the measurement quantity to a receiving device, where
the first signal includes at least one of the following: a sensing signal, a communication signal, and an integrated sensing and communication signal.

Optionally, the apparatus further includes:
a first receiving module, configured to receive a service sensing manner sent by a core network device or a receiving device; or
a fourth determining module, configured to determine a service sensing manner according to the sensing and communication QoS characteristic parameter, where
different sensing manners correspond to different transmit and receive ends of a first signal; and
the first signal includes at least one of the following: a sensing signal, a communication signal, and an integrated sensing and communication signal.

Optionally, the apparatus further includes one of the following:
a second receiving module, configured to receive a sending device and a receiving device that are sent by a core network device or a receiving device and that participate in sensing and communication; and
a fifth determining module, configured to determine, according to the sensing and communication QoS characteristic parameter, the sending device and the receiving device that participate in sensing and communication.

It should be noted that this apparatus embodiment is an apparatus corresponding to the foregoing method. All implementations in the foregoing method embodiment are applicable to this apparatus embodiment, and a same technical effect can be achieved. Details are not described herein again.

The quality of service characteristic parameter determining apparatus provided in this embodiment of this application can implement the processes implemented in the method embodiment in FIG. 1, and achieve a same technical effect. To avoid repetition, details are not described herein again.

Preferably, an embodiment of this application further provides a sending device, including a processor, a memory, and a program or an instruction that is stored in the memory and that can be run on the processor. The program or the instruction is executed by the processor to implement the processes of the quality of service characteristic parameter determining method embodiment on the sending device side, and a same technical effect can be achieved. To avoid repetition, details are not described herein again.

An embodiment of this application further provides a readable storage medium. The computer readable storage medium stores a program or an instruction, and the program or the instruction is executed by a processor to implement the processes of the quality of service characteristic parameter determining method embodiment on the sending device side, and a same technical effect can be achieved. To avoid repetition, details are not described herein again.

The computer readable storage medium includes a read-only memory (Read-Only Memory, ROM), a random access memory (Random Access Memory, RAM), a magnetic disk, an optical disc, or the like.

An embodiment of this application further provides a sending device, including a processor and a communication interface. The processor is configured to determine a sensing and communication quality of service QoS characteristic parameter, where
the sensing and communication QoS characteristic parameter includes at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

This device embodiment corresponds to the foregoing quality of service characteristic parameter determining method embodiment. Each implementation process and implementation of the foregoing method embodiment may be applicable to this device embodiment, and a same technical effect can be achieved.

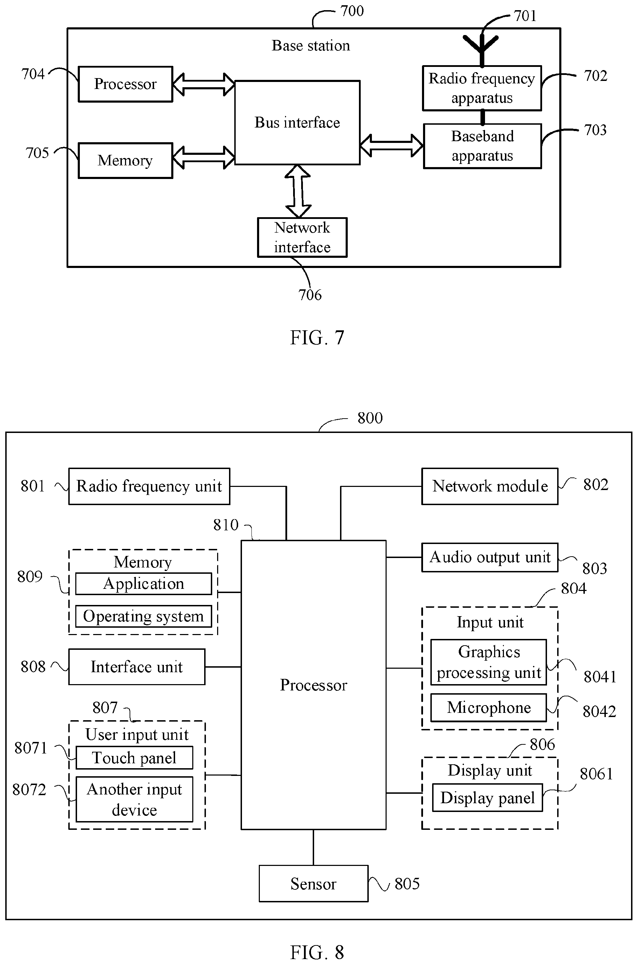

Specifically, an embodiment of this application further provides a sending device. When the sending device is a base station, as shown in FIG. 7, the base station 700 includes an antenna 701, a radio frequency apparatus 702, and a baseband apparatus 703. The antenna 701 is connected to the radio frequency apparatus 702. In an uplink direction, the radio frequency apparatus 702 receives information by using the antenna 701, and sends the received information to the baseband apparatus 703 for processing. In a downlink direction, the baseband apparatus 703 processes information that needs to be sent, and sends processed information to the radio frequency apparatus 702. The radio frequency apparatus 702 processes the received information, and sends processed information by using the antenna 701.

The frequency band processing apparatus may be located in the baseband apparatus 703, and the method performed by the base station in the foregoing embodiment may be implemented in the baseband apparatus 703. The baseband apparatus 703 includes a processor 704 and a memory 705.

The baseband apparatus 703 may include, for example, at least one baseband board, where a plurality of chips are disposed on the baseband board. As shown in FIG. 7, one chip, for example, the processor 704, is connected to the memory 705, to invoke a program in the memory 705 to perform the operations of the network device shown in the foregoing method embodiment.

The baseband apparatus 703 may further include a network interface 706, configured to exchange information with the radio frequency apparatus 702. For example, the interface is a common public radio interface (Common Public Radio Interface, CPRI).

Specifically, the base station in this embodiment of the present invention further includes an instruction or a program that is stored in the memory 705 and that can be run on the processor 704. The processor 704 invokes the instruction or the program in the memory 705 to perform the method performed by the modules shown in FIG. 6, and a same technical effect is achieved. To avoid repetition, details are not described herein again.

When the sending device is a terminal, FIG. 8 is a schematic structural diagram of hardware of a terminal.

The terminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include the power supply (for example, a battery) that supplies power to each component. The power supply may be logically connected to the processor 810 by using a power supply management system, so as to manage functions such as charging, discharging, and power consumption by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) 8041 and a microphone 8042, and the graphics processing unit 8041 processes image data of a still image or a video that is obtained by an image capturing apparatus (for example, a camera) in a video capturing mode or an image capturing mode. The display unit 806 may include a display panel 8061. The display panel 8061 may be configured in a form such as a liquid crystal display or an organic light-emitting diode. The user input unit 807 may include a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or instruction storage area and a data storage area. The program or instruction storage area may store an operating system, and an application or an instruction required by at least one function (for example, a sound playing function or an image playing function). In addition, the memory 809 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 810 may include one or more processing units. Optionally, an application processor and a modem processor may be integrated into the processor 810. The application processor mainly processes an operating system, a user interface, an application, an instruction, or the like. The modem processor mainly processes wireless communication, for example, a baseband processor. It can be understood that, alternatively, the modem processor may not be integrated into the processor 810.

The processor 810 is configured to:
determine a sensing and communication quality of service QoS characteristic parameter, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

Optionally, the processor 810 is configured to:
obtain, by the sending device, an integrated sensing and communication quality parameter set, where the integrated sensing and communication quality parameter set is a correspondence between an integrated sensing and communication quality index ISAC QI, a communication QoS characteristic parameter, and a sensing QoS characteristic parameter.

The radio frequency unit 801 is configured to receive an ISAC QI notified by a core network device or a receiving device.

The processor 810 is configured to determine, by the sending device, the sensing and communication QoS characteristic parameter according to the ISAC QI and the integrated sensing and communication quality parameter set.

Optionally, the integrated sensing and communication quality parameter set is stipulated in a protocol or notified by the core network device.

Optionally, the processor 810 is configured to:
obtain a sensing QoS parameter set and a communication QoS parameter set, where the sensing QoS parameter set is a correspondence between a sensing quality index SQI and a value of a sensing QoS characteristic parameter, and the communication QoS parameter set is a correspondence between a communication quality index and a value of a communication QoS characteristic parameter.

The radio frequency unit 801 is configured to receive an SQI and a communication quality index that are notified by a core network device or a receiving device.

The processor 810 is configured to: obtain the sensing QoS characteristic parameter according to the SQI and the sensing QoS parameter set; and obtain the communication QoS characteristic parameter according to the communication quality index and the communication QoS parameter set; and
determine, by the sending device, the sensing QoS characteristic parameter and the communication QoS characteristic parameter as the sensing and communication QoS characteristic parameter.

Optionally, the radio frequency unit 801 is configured to receive, by the sending device, first information sent by a core network device or a receiving device, where the first information indicates the sensing and communication QoS characteristic parameter.

Optionally, the sensing and communication QoS characteristic parameter further includes at least one of a sensing and communication service type and a sensing and communication priority level; or the sensing and communication QoS characteristic parameter further includes at least one of a sensing service type, a sensing priority level, a communication service type, and a communication priority level, where
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

Optionally, the sensing service type includes at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

Optionally, the communication service type includes at least one of the following:
a guaranteed bit rate communication service;
a non-guaranteed bit rate communication service; and
a guaranteed bit rate delay-critical communication service.

Optionally, the sensing and communication service type includes at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

Optionally, after the determining, by a sending device, a sensing and communication quality of service QoS characteristic parameter, the method further includes:
determining, by the sending device, sensing and communication parameter configuration information according to the sensing and communication QoS characteristic parameter; and
sending, by the sending device, a first signal to a receiving device according to the sensing and communication parameter configuration information, where
the sensing and communication parameter configuration information includes at least one of the following:
   a bandwidth of the first signal;
   a quantity of transmit antennas of the first signal;
   a transmit power of the first signal;
   a period of the first signal; and
   a quantity of pulses of the first signal, where
   the first signal includes at least one of the following: a sensing signal, a communication signal, and an integrated sensing and communication signal.

Optionally, the processor 810 is configured to:
map the first signal to a radio bearer RB according to a target mapping rule.

The radio frequency unit 801 is configured to send the first signal to the receiving device through the RB, where
the target mapping rule includes at least one of the following:
a plurality of first signals are mapped to a same RB; and
one first signal is mapped to one RB.

Optionally, the processor 810 is further configured to:
determine, by the sending device, a measurement quantity of a first signal according to the sensing and communication QoS characteristic parameter.

The radio frequency unit 801 is configured to send the measurement quantity to a receiving device, where
the first signal includes at least one of the following: a sensing signal, a communication signal, and an integrated sensing and communication signal.

Optionally, the radio frequency unit 801 is further configured to:
receive a service sensing manner sent by a core network device or a receiving device; or
the processor 810 is further configured to determine a service sensing manner according to the sensing and communication QoS characteristic parameter, where
different sensing manners correspond to different transmit and receive ends of a sensing signal or an integrated sensing and communication signal; and the first signal includes at least one of the following: a sensing signal, a communication signal, and an integrated sensing and communication signal.

Optionally, the radio frequency unit 801 is further configured to:
receive, by the sending device, a sending device and a receiving device that are sent by a core network device or a receiving device and that participate in sensing and communication; and
the processor 810 is further configured to determine, according to the sensing and communication QoS characteristic parameter, the sending device and the receiving device that participate in sensing and communication.

It should be noted that, in this embodiment of this application, the sensing and communication quality of service QoS parameter is determined, so that accurate signal sending can be implemented, thereby improving accuracy of integrated sensing and communication and sensing efficiency.

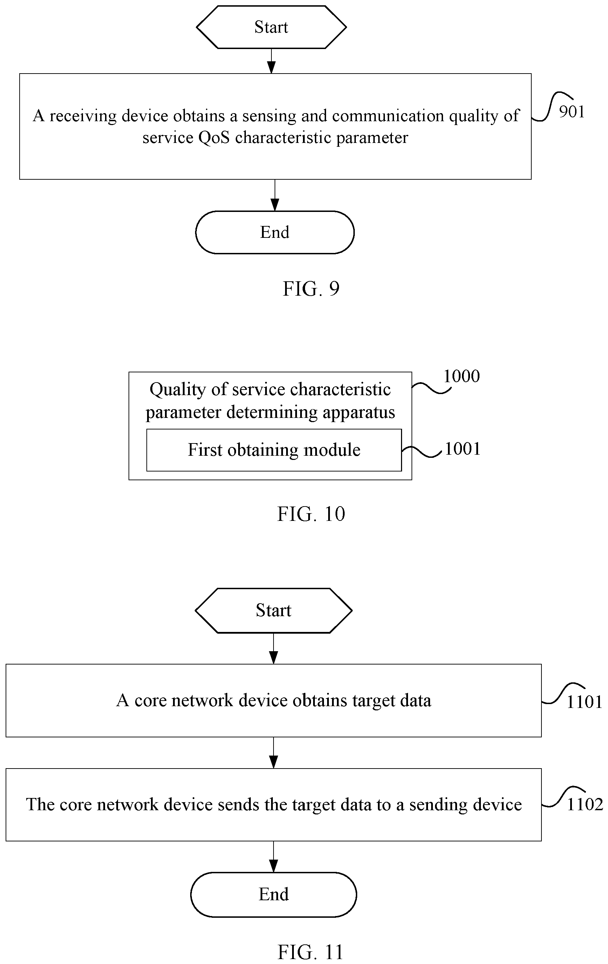

As shown in FIG. 9, an embodiment of this application further provides a quality of service characteristic parameter determining method, including:

Step 901: A receiving device obtains a sensing and communication quality of service QoS characteristic parameter.

The sensing and communication QoS characteristic parameter includes at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

Optionally, the obtaining, by a receiving device, a sensing and communication quality of service QoS characteristic parameter includes:
obtaining, by the receiving device, an integrated sensing and communication quality parameter set, where the integrated sensing and communication quality parameter set is a correspondence between an integrated sensing and communication quality index ISAC QI, a communication QoS characteristic parameter, and a sensing QoS characteristic parameter;
receiving, by the receiving device, an ISAC QI notified by a core network device or a sending device; and
determining, by the receiving device, the sensing and communication QoS characteristic parameter according to the ISAC QI and the integrated sensing and communication quality parameter set.

Optionally, the integrated sensing and communication quality parameter set is stipulated in a protocol or notified by the core network device or the sending device.

Optionally, the obtaining, by a receiving device, a sensing and communication quality of service QoS characteristic parameter includes:
obtaining, by the receiving device, a sensing QoS parameter set and a communication QoS parameter set, where the sensing QoS parameter set is a correspondence between a sensing quality index SQI and a value of a sensing QoS characteristic parameter, and the communication QoS parameter set is a correspondence between a communication quality index and a value of a communication QoS characteristic parameter;
receiving, by the receiving device, an SQI and a communication quality index that are notified by a core network device or a sending device;
obtaining, by the receiving device, the sensing QoS characteristic parameter according to the SQI and the sensing QoS parameter set;
obtaining, by the receiving device, the communication QoS characteristic parameter according to the communication quality index and the communication QoS parameter set; and
determining, by the receiving device, the sensing QoS characteristic parameter and the communication QoS characteristic parameter as the sensing and communication QoS characteristic parameter.

Optionally, the obtaining, by a receiving device, a sensing and communication quality of service QoS characteristic parameter includes:
receiving, by the receiving device, second information sent by a core network device or a sending device, where
the second information indicates the sensing and communication QoS characteristic parameter.

Optionally, the sensing and communication QoS characteristic parameter further includes at least one of a sensing and communication service type and a sensing and communication priority level; or the sensing and communication QoS characteristic parameter further includes at least one of a sensing service type, a sensing priority level, a communication service type, and a communication priority level, where
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

Optionally, the method further includes:
obtaining, by the receiving device, sensing and communication parameter configuration information; and
receiving, by the receiving device according to the sensing and communication parameter configuration information, a first signal sent by a sending device, where
the sensing and communication parameter configuration information includes at least one of the following:
   a bandwidth of the first signal, a quantity of transmit antennas of the first signal, a transmit power of the first signal, a period of the first signal, and a quantity of pulses of the first signal, where
   the first signal includes at least one of the following: a sensing signal, a communication signal, and an integrated sensing and communication signal.

Optionally, the obtaining, by the receiving device, sensing and communication parameter configuration information includes one of the following:
receiving, by the receiving device, the sensing and communication parameter configuration information sent by the sending device or a core network device; and
determining, by the receiving device, the sensing and communication parameter configuration information according to the sensing and communication QoS characteristic parameter.

Optionally, the receiving a first signal sent by a sending device includes:
determining a target mapping rule between the first signal and a radio bearer RB; and
receiving, through the RB according to the target mapping rule, the first signal sent by the sending device, where
the target mapping rule includes at least one of the following:
   a plurality of first signals are mapped to a same RB; and
   one first signal is mapped to one RB.

Optionally, after the receiving, by the receiving device according to the sensing and communication parameter configuration information, an integrated sensing and communication signal sent by a sending device, the method further includes:
obtaining, by the receiving device, a measurement quantity of the first signal; and
measuring, by the receiving device, the first signal according to the measurement quantity of the first signal, to determine a measurement value corresponding to the measurement quantity.

Optionally, the obtaining, by the receiving device, a measurement quantity of the first signal includes one of the following:
receiving, by the receiving device, the measurement quantity of the first signal sent by the sending device; and
determining, by the receiving device, the measurement quantity of the first signal according to the sensing and communication QoS characteristic parameter.

Optionally, the sensing service type includes at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

Optionally, the communication service type includes at least one of the following:
a guaranteed bit rate communication service;
a non-guaranteed bit rate communication service; and
a guaranteed bit rate delay-critical communication service.

Optionally, the sensing and communication service type includes at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

It should be noted that all descriptions of the receiving device in the foregoing embodiment are applicable to the quality of service characteristic parameter determining method embodiment, and a same technical effect can be achieved. Details are not described herein again.

As shown in FIG. 10, an embodiment of this application further provides a quality of service characteristic parameter determining apparatus 1000, applied to a receiving device and including:
a first obtaining module 1001, configured to obtain a sensing and communication quality of service QoS characteristic parameter, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

Optionally, the first obtaining module 1001 includes:
a fifth obtaining unit, configured to obtain an integrated sensing and communication quality parameter set, where the integrated sensing and communication quality parameter set is a correspondence between an integrated sensing and communication quality index ISAC QI, a communication QoS characteristic parameter, and a sensing QoS characteristic parameter;
a fourth receiving unit, configured to receive an ISAC QI notified by a core network device or a sending device; and
a third determining unit, configured to determine the sensing and communication QoS characteristic parameter according to the ISAC QI and the integrated sensing and communication quality parameter set.

Optionally, the integrated sensing and communication quality parameter set is stipulated in a protocol or notified by the core network device or the sending device.

Optionally, the first obtaining module 1001 includes:
a sixth obtaining unit, configured to obtain a sensing QoS parameter set and a communication QoS parameter set, where the sensing QoS parameter set is a correspondence between a sensing quality index SQI and a value of a sensing QoS characteristic parameter, and the communication QoS parameter set is a correspondence between a communication quality index and a value of a communication QoS characteristic parameter;
a fifth receiving unit, configured to receive an SQI and a communication quality index that are notified by a core network device or a sending device;
a seventh obtaining unit, configured to obtain the sensing QoS characteristic parameter according to the SQI and the sensing QoS parameter set;
an eighth obtaining unit, configured to obtain the communication QoS characteristic parameter according to the communication quality index and the communication QoS parameter set; and
a fourth determining unit, configured to determine the sensing QoS characteristic parameter and the communication QoS characteristic parameter as the sensing and communication QoS characteristic parameter.

Optionally, the first obtaining module 1001 includes:
a sixth receiving unit, configured to receive second information sent by a core network device or a sending device, where
the second information indicates the sensing and communication QoS characteristic parameter.

Optionally, the sensing and communication QoS characteristic parameter further includes at least one of a sensing and communication service type and a sensing and communication priority level; or the sensing and communication QoS characteristic parameter further includes at least one of a sensing service type, a sensing priority level, a communication service type, and a communication priority level, where
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

Optionally, the apparatus further includes:
a third obtaining module, configured to obtain sensing and communication parameter configuration information; and
a third receiving module, configured to receive, according to the sensing and communication parameter configuration information, a first signal sent by a sending device, where
the sensing and communication parameter configuration information includes at least one of the following:
   a bandwidth of the first signal, a quantity of transmit antennas of the first signal, a transmit power of the first signal, a period of the first signal, and a quantity of pulses of the first signal, where
   the first signal includes at least one of the following: a sensing signal, a communication signal, and an integrated sensing and communication signal.

Optionally, the third obtaining module is configured to perform one of the following:
receiving, by the receiving device, the sensing and communication parameter configuration information sent by the sending device or a core network device; and
determining, by the receiving device, the sensing and communication parameter configuration information according to the sensing and communication QoS characteristic parameter.

Optionally, the third receiving module is configured to:
determining a target mapping rule between the first signal and a radio bearer RB; and
receiving, through the RB according to the target mapping rule, the first signal sent by the sending device, where
the target mapping rule includes at least one of the following:
   a plurality of first signals are mapped to a same RB; and
   one first signal is mapped to one RB.

Optionally, after the third receiving module receives, according to the sensing and communication parameter configuration information, the first signal sent by the sending device, the apparatus further includes:
a fourth obtaining module, configured to obtain, by the receiving device, a measurement quantity of the first signal; and
a sixth determining module, configured to measure the first signal according to the measurement quantity of the first signal, to determine a measurement value corresponding to the measurement quantity.

Optionally, the fourth obtaining module is configured to perform one of the following:
receiving, by the receiving device, the measurement quantity of the first signal sent by the sending device; and
determining, by the receiving device, the measurement quantity of the first signal according to the sensing and communication QoS characteristic parameter.

Optionally, the sensing service type includes at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

Optionally, the communication service type includes at least one of the following:
a guaranteed bit rate communication service;
a non-guaranteed bit rate communication service; and
a guaranteed bit rate delay-critical communication service.

Optionally, the sensing and communication service type includes at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

Preferably, an embodiment of this application further provides a receiving device, including a processor, a memory, and a program or an instruction that is stored in the memory and that can be run on the processor. The program or the instruction is executed by the processor to implement the processes of the quality of service characteristic parameter determining method embodiment on the receiving device side, and a same technical effect can be achieved. To avoid repetition, details are not described herein again.

An embodiment of this application further provides a readable storage medium. The computer readable storage medium stores a program or an instruction, and the program or the instruction is executed by a processor to implement the processes of the quality of service characteristic parameter determining method embodiment on the receiving device side, and a same technical effect can be achieved. To avoid repetition, details are not described herein again.

The computer readable storage medium includes a read-only memory (Read-Only Memory, ROM), a random access memory (Random Access Memory, RAM), a magnetic disk, an optical disc, or the like.

An embodiment of this application further provides a receiving device, including a processor and a communication interface. The processor is configured to obtain a sensing and communication quality of service QoS characteristic parameter, where
the sensing and communication QoS characteristic parameter includes at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

This device embodiment corresponds to the foregoing method embodiment applied to the receiving device side. Each implementation process and implementation of the foregoing method embodiment may be applicable to this device embodiment, and a same technical effect can be achieved.

Specifically, an embodiment of this application further provides a receiving device. Specifically, for a structure of the receiving device, refer to the structure in FIG. 7 or FIG. 8. Details are not described herein again.

Specifically, the processor invokes the instruction or the program in the memory to perform the method performed by the modules shown in FIG. 10, and a same technical effect is achieved. To avoid repetition, details are not described herein again.

As shown in FIG. 11, an embodiment of this application further provides a data sending method, including:
Step 1101: A core network device obtains target data, where the target data includes a sensing and communication quality of service QoS characteristic parameter, an integrated sensing and communication quality index ISAC QI, a sensing quality index SQI, and a communication quality index.
Step 1102: The core network device sends the target data to a sending device and/or a receiving device.

The sensing and communication QoS characteristic parameter includes at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

Optionally, the method further includes:
determining third information according to the target data, where
the third information includes at least one of the following:
   a service sensing manner, where different sensing manners correspond to different transmit and receive ends of a first signal; and
   a sending device and a receiving device that participate in sensing and communication, where
   the first signal includes at least one of the following: a sensing signal, a communication signal, and an integrated sensing and communication signal.

Optionally, after the determining third information according to the target data, the method further includes:
sending, by the core network device, the service sensing manner and/or the sending device and the receiving device that participate in sensing and communication to the sending device or the receiving device.

Optionally, the sensing and communication QoS characteristic parameter further includes at least one of a sensing and communication service type and a sensing and communication priority level; or the sensing and communication QoS characteristic parameter further includes at least one of a sensing service type, a sensing priority level, a communication service type, and a communication priority level, where
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

Optionally, the sensing service type includes at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

Optionally, the communication service type includes at least one of the following:
a guaranteed bit rate communication service;
a non-guaranteed bit rate communication service; and
a guaranteed bit rate delay-critical communication service.

Optionally, the sensing and communication service type includes at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

It should be noted that all descriptions of the core network device in the foregoing embodiment are applicable to the data sending method embodiment, and a same technical effect can be achieved. Details are not described herein again.

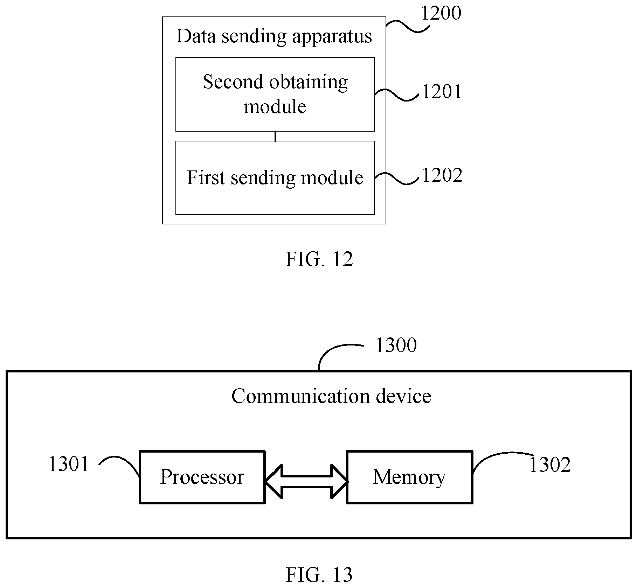

As shown in FIG. 12, an embodiment of this application further provides a data sending apparatus 1200, applied to a core network device and including:
a second obtaining module 1201, configured to obtain target data, where the target data includes a sensing and communication quality of service QoS characteristic parameter, an integrated sensing and communication quality index ISAC QI, a sensing quality index SQI, and a communication quality index; and
a first sending module 1202, configured to send the target data to a sending device and/or a receiving device, where
the sensing and communication QoS characteristic parameter includes at least one of the following:
   a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

Optionally, the apparatus further includes:
a seventh determining module, configured to determine third information according to the target data, where
the third information includes at least one of the following:
   a service sensing manner, where different sensing manners correspond to different transmit and receive ends of a first signal; and
   a sending device and a receiving device that participate in sensing and communication, where
   the first signal includes at least one of the following: a sensing signal, a communication signal, and an integrated sensing and communication signal.

Optionally, after the seventh determining module determines the third information according to the target data, the apparatus further includes:
a fourth sending module, configured to send the service sensing manner and/or the sending device and the receiving device that participate in sensing and communication to the sending device or the receiving device.

Optionally, the sensing and communication QoS characteristic parameter further includes at least one of a sensing and communication service type and a sensing and communication priority level; or the sensing and communication QoS characteristic parameter further includes at least one of a sensing service type, a sensing priority level, a communication service type, and a communication priority level, where
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

Optionally, the sensing service type includes at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

Optionally, the communication service type includes at least one of the following:
a guaranteed bit rate communication service;
a non-guaranteed bit rate communication service; and
a guaranteed bit rate delay-critical communication service.

Optionally, the sensing and communication service type includes at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

It should be noted that all descriptions of the core network device in the foregoing embodiment are applicable to the data sending method embodiment, and a same technical effect can be achieved. Details are not described herein again.

Preferably, an embodiment of this application further provides a core network device, including a processor, a memory, and a program or an instruction that is stored in the memory and that can be run on the processor. The program or the instruction is executed by the processor to implement the processes of the data sending method embodiment on the core network device side, and a same technical effect can be achieved. To avoid repetition, details are not described herein again.

An embodiment of this application further provides a readable storage medium. The computer readable storage medium stores a program or an instruction, and the program or the instruction is executed by a processor to implement the processes of the data sending method embodiment on the core network device side, and a same technical effect can be achieved. To avoid repetition, details are not described herein again.

The computer readable storage medium includes a read-only memory (Read-Only Memory, ROM), a random access memory (Random Access Memory, RAM), a magnetic disk, an optical disc, or the like.

An embodiment of this application further provides a core network device, including a processor and a communication interface. The processor is configured to obtain target data, where the target data includes a sensing and communication quality of service QoS characteristic parameter, an integrated sensing and communication quality index ISAC QI, a sensing quality index SQI, and a communication quality index; and the communication interface is configured to send the target data to a sending device and/or a receiving device, where
the sensing and communication QoS characteristic parameter includes at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

This device embodiment corresponds to the foregoing method embodiment applied to the core network device side. Each implementation process and implementation of the foregoing method embodiment may be applicable to this core network device embodiment, and a same technical effect can be achieved.

Specifically, an embodiment of this application further provides a core network device. Specifically, for a structure of the core network device, refer to the structure of the base station in FIG. 7. Details are not described herein again.

Specifically, the processor invokes the instruction or the program in the memory to perform the method performed by the modules shown in FIG. 12, and a same technical effect is achieved. To avoid repetition, details are not described herein again.

Optionally, as shown in FIG. 13, an embodiment of this application further provides a communication device 1300, including a processor 1301, a memory 1302, and a program or an instruction that is stored in the memory 1302 and that can be run on the processor 1301. For example, when the communication device 1300 is a sending device, the program or the instruction is executed by the processor 1301 to implement the processes of the foregoing quality of service characteristic parameter determining method embodiment, and a same technical effect can be achieved. When the communication device 1300 is a receiving device, the program or the instruction is executed by the processor 1301 to implement the processes of the foregoing quality of service characteristic parameter determining method embodiment, and a same technical effect can be achieved. When the communication device 1300 is a core network device, the program or the instruction is executed by the processor 1301 to implement the processes of the data sending method embodiment, and a same technical effect can be achieved. To avoid repetition, details are not described herein again.

The sending device and the receiving device in the embodiments of this application may be a terminal, and may be a device that provides a user with voice and/or data connectivity, a handheld device with a wireless connection function, another processing device connected to a wireless modem, or the like. In different systems, names of the terminal device may also be different. For example, in a 5G system, the terminal device may be referred to as user equipment (User Equipment, UE). The wireless terminal device may communicate with one or more core networks (Core Network, CN) by using a radio access network (Radio Access Network, RAN). The wireless terminal device may be a mobile terminal device such as a mobile phone (or referred to as a "cellular" phone), or a computer with a mobile terminal device. For example, the wireless terminal device may be a portable, pocket-sized, handheld, computer built-in, or in-vehicle mobile apparatus that exchanges voice and/or data with the radio access network. For example, the wireless terminal device may be a device such as a personal communication service (Personal Communication Service, PCS) phone, a cordless telephone set, a Session Initiation Protocol (Session Initiation Protocol, SIP) phone, a wireless local loop (Wireless Local Loop, WLL) station, or a personal digital assistant (Personal Digital Assistant, PDA). The wireless terminal device may also be referred to as a system, a subscriber unit (subscriber unit), a subscriber station (subscriber station), a mobile station (mobile station), a mobile console (mobile), a remote station (remote station), an access point (access point), a remote terminal device (remote terminal), an access terminal device (access terminal), a user terminal device (user terminal), a user agent (user agent), and a user device (user device). This is not limited in the embodiments of this application.

The sending device and the receiving device in the embodiments of this application may be a base transceiver station (Base Transceiver Station, BTS) in global system for mobile communication (Global System of Mobile communication, GSM) or code division multiple access (Code Division Multiple Access, CDMA), or a NodeB (NodeB, NB) in wideband code division multiple access (Wideband Code Division Multiple Access, WCDMA), or an evolved NodeB (Evolutional NodeB, eNB or eNodeB) in LTE, or a relay node or an access point, or a base station in a future 5G network. This is not limited herein.

One or more antennas may be separately used between the sending device and the receiving device to perform multiple-input multiple-output (Multi Input Multi Output, MIMO) transmission. The MIMO transmission may be single-user MIMO (Single User MIMO, SU-MIMO) or multi-user MIMO (Multiple User MIMO, MU-MIMO). According to a form and a quantity of root antenna combinations, the MIMO transmission may be 2-dimensional MIMO (2 Dimension MIMO, 2D-MIMO), 3-dimensional MIMO (3 Dimension MIMO, 3D-MIMO), full-dimensional MIMO (Full Dimension MIMO) FD-MIMO, or massive MIMO (massive-MIMO), or may be diversity transmission, precoding transmission, beamforming transmission, or the like.

An embodiment of this application further provides a chip. The chip includes a processor and a communication interface, the communication interface is coupled to the processor, and the processor is configured to run a program or an instruction to implement the processes of the foregoing quality of service characteristic parameter determining method or data sending method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially or the part contributing to the prior art may be implemented in a form of a software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are merely illustrative but not restrictive. Under the enlightenment of this application, a person of ordinary skill in the art can make many forms without departing from the purpose of this application and the protection scope of the claims, all of which fall within the protection of this application.

## Claims

1. A quality of service characteristic parameter determining method, comprising:
determining, by a sending device, a sensing and communication quality of service QoS characteristic parameter, wherein
the sensing and communication QoS characteristic parameter comprises at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

2. The method according to claim 1, wherein the determining, by a sending device, a sensing and communication quality of service QoS characteristic parameter comprises:
obtaining, by the sending device, an integrated sensing and communication quality parameter set, wherein the integrated sensing and communication quality parameter set is a correspondence between an integrated sensing and communication quality index ISAC QI, a communication QoS characteristic parameter, and a sensing QoS characteristic parameter;
receiving, by the sending device, an ISAC QI notified by a core network device or a receiving device; and
determining, by the sending device, the sensing and communication QoS characteristic parameter according to the ISAC QI and the integrated sensing and communication quality parameter set.

3. The method according to claim 2, wherein the integrated sensing and communication quality parameter set is stipulated in a protocol or notified by the core network device.

4. The method according to claim 1, wherein the determining, by a sending device, a sensing and communication quality of service QoS characteristic parameter comprises:
obtaining, by the sending device, a sensing QoS parameter set and a communication QoS parameter set, wherein the sensing QoS parameter set is a correspondence between a sensing quality index SQI and a value of a sensing QoS characteristic parameter, and the communication QoS parameter set is a correspondence between a communication quality index and a value of a communication QoS characteristic parameter;
receiving, by the sending device, an SQI and a communication quality index that are notified by a core network device or a receiving device;
obtaining, by the sending device, the sensing QoS characteristic parameter according to the SQI and the sensing QoS parameter set;
obtaining, by the sending device, the communication QoS characteristic parameter according to the communication quality index and the communication QoS parameter set; and
determining, by the sending device, the sensing QoS characteristic parameter and the communication QoS characteristic parameter as the sensing and communication QoS characteristic parameter.

5. The method according to claim 1, wherein the determining, by a sending device, a sensing and communication quality of service QoS characteristic parameter comprises:
receiving, by the sending device, first information sent by a core network device or a receiving device, wherein the first information indicates the sensing and communication QoS characteristic parameter.

6. The method according to claim 1, wherein the sensing and communication QoS characteristic parameter further comprises at least one of a sensing and communication service type and a sensing and communication priority level; or the sensing and communication QoS characteristic parameter further comprises at least one of a sensing service type, a sensing priority level, a communication service type, and a communication priority level, wherein
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

7. The method according to claim 6, wherein the sensing service type comprises at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

8. The method according to claim 6, wherein the communication service type comprises at least one of the following:
a guaranteed bit rate communication service;
a non-guaranteed bit rate communication service; and
a guaranteed bit rate delay-critical communication service.

9. The method according to claim 6, wherein the sensing and communication service type comprises at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

10. The method according to claim 1, wherein after the determining, by a sending device, a sensing and communication quality of service QoS characteristic parameter, the method further comprises:
determining, by the sending device, sensing and communication parameter configuration information according to the sensing and communication QoS characteristic parameter; and
sending, by the sending device, a first signal to a receiving device according to the sensing and communication parameter configuration information, wherein
the sensing and communication parameter configuration information comprises at least one of the following:
a bandwidth of the first signal;
a quantity of transmit antennas of the first signal;
a transmit power of the first signal;
a period of the first signal; and
a quantity of pulses of the first signal, wherein
the first signal comprises at least one of the following: a sensing signal, a communication signal, and an integrated sensing and communication signal.

11. The method according to claim 10, wherein the sending, by the sending device, a first signal to a receiving device according to the sensing and communication parameter configuration information comprises:
mapping, by the sending device, the first signal to a radio bearer RB according to a target mapping rule; and
sending, by the sending device, the first signal to the receiving device through the RB, wherein
the target mapping rule comprises at least one of the following:
a plurality of first signals are mapped to a same RB; and
one first signal is mapped to one RB.

12. The method according to claim 1, further comprising:
determining, by the sending device, a measurement quantity of a first signal according to the sensing and communication QoS characteristic parameter; and
sending, by the sending device, the measurement quantity to a receiving device, wherein
the first signal comprises at least one of the following: a sensing signal, a communication signal, and an integrated sensing and communication signal.

13. The method according to claim 1, further comprising:
receiving, by the sending device, a service sensing manner sent by a core network device or a receiving device; or
determining a service sensing manner according to the sensing and communication QoS characteristic parameter, wherein
different sensing manners correspond to different transmit and receive ends of a first signal; and
the first signal comprises at least one of the following: a sensing signal, a communication signal, and an integrated sensing and communication signal.

14. The method according to claim 1, further comprising one of the following:
receiving, by the sending device, a sending device and a receiving device that are sent by a core network device or a receiving device and that participate in sensing and communication; and
determining, by the sending device according to the sensing and communication QoS characteristic parameter, the sending device and the receiving device that participate in sensing and communication.

15. A communication method, comprising:
obtaining, by a receiving device, a sensing and communication quality of service QoS characteristic parameter, wherein
the sensing and communication QoS characteristic parameter comprises at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

16. The method according to claim 15, wherein the obtaining, by a receiving device, a sensing and communication quality of service QoS characteristic parameter comprises:
obtaining, by the receiving device, an integrated sensing and communication quality parameter set, wherein the integrated sensing and communication quality parameter set is a correspondence between an integrated sensing and communication quality index ISAC QI, a communication QoS characteristic parameter, and a sensing QoS characteristic parameter;
receiving, by the receiving device, an ISAC QI notified by a core network device or a sending device; and
determining, by the receiving device, the sensing and communication QoS characteristic parameter according to the ISAC QI and the integrated sensing and communication quality parameter set.

17. The method according to claim 16, wherein the integrated sensing and communication quality parameter set is stipulated in a protocol or notified by the core network device or the sending device.

18. The method according to claim 15, wherein the obtaining, by a receiving device, a sensing and communication quality of service QoS characteristic parameter comprises:
obtaining, by the receiving device, a sensing QoS parameter set and a communication QoS parameter set, wherein the sensing QoS parameter set is a correspondence between a sensing quality index SQI and a value of a sensing QoS characteristic parameter, and the communication QoS parameter set is a correspondence between a communication quality index and a value of a communication QoS characteristic parameter;
receiving, by the receiving device, an SQI and a communication quality index that are notified by a core network device or a sending device;
obtaining, by the receiving device, the sensing QoS characteristic parameter according to the SQI and the sensing QoS parameter set;
obtaining, by the receiving device, the communication QoS characteristic parameter according to the communication quality index and the communication QoS parameter set; and
determining, by the receiving device, the sensing QoS characteristic parameter and the communication QoS characteristic parameter as the sensing and communication QoS characteristic parameter.

19. The method according to claim 15, wherein the obtaining, by a receiving device, a sensing and communication quality of service QoS characteristic parameter comprises:
receiving, by the receiving device, second information sent by a core network device or a sending device, wherein
the second information indicates the sensing and communication QoS characteristic parameter.

20. The method according to claim 15, wherein the sensing and communication QoS characteristic parameter further comprises at least one of a sensing and communication service type and a sensing and communication priority level; or the sensing and communication QoS characteristic parameter further comprises at least one of a sensing service type, a sensing priority level, a communication service type, and a communication priority level, wherein
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

21. The method according to claim 15, further comprising:
obtaining, by the receiving device, sensing and communication parameter configuration information; and
receiving, by the receiving device according to the sensing and communication parameter configuration information, a first signal sent by a sending device, wherein
the sensing and communication parameter configuration information comprises at least one of the following:
a bandwidth of the first signal, a quantity of transmit antennas of the first signal, a transmit power of the first signal, a period of the first signal, and a quantity of pulses of the first signal, wherein
the first signal comprises at least one of the following: a sensing signal, a communication signal, and an integrated sensing and communication signal.

22. The method according to claim 21, wherein the obtaining, by the receiving device, sensing and communication parameter configuration information comprises one of the following:
receiving, by the receiving device, the sensing and communication parameter configuration information sent by the sending device or a core network device; and
determining, by the receiving device, the sensing and communication parameter configuration information according to the sensing and communication QoS characteristic parameter.

23. The method according to claim 21, wherein the receiving a first signal sent by a sending device comprises:
determining a target mapping rule between the first signal and a radio bearer RB; and
receiving, through the RB according to the target mapping rule, the first signal sent by the sending device, wherein
the target mapping rule comprises at least one of the following:
a plurality of first signals are mapped to a same RB; and
one first signal is mapped to one RB.

24. The method according to claim 21, wherein after the receiving, by the receiving device according to the sensing and communication parameter configuration information, a first signal sent by a sending device, the method further comprises:
obtaining, by the receiving device, a measurement quantity of the first signal; and
measuring, by the receiving device, the first signal according to the measurement quantity of the first signal, to determine a measurement value corresponding to the measurement quantity.

25. The method according to claim 24, wherein the obtaining, by the receiving device, a measurement quantity of the first signal comprises one of the following:
receiving, by the receiving device, the measurement quantity of the first signal sent by the sending device; and
determining, by the receiving device, the measurement quantity of the first signal according to the sensing and communication QoS characteristic parameter.

26. The method according to claim 20, wherein the sensing service type comprises at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

27. The method according to claim 20, wherein the communication service type comprises at least one of the following:
a guaranteed bit rate communication service;
a non-guaranteed bit rate communication service; and
a guaranteed bit rate delay-critical communication service.

28. The method according to claim 20, wherein the sensing and communication service type comprises at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

29. A data sending method, comprising:
obtaining, by a core network device, target data, wherein the target data comprises a sensing and communication quality of service QoS characteristic parameter, an integrated sensing and communication quality index ISAC QI, a sensing quality index SQI, and a communication quality index; and
sending, by the core network device, the target data to a sending device and/or a receiving device, wherein
the sensing and communication QoS characteristic parameter comprises at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

30. The method according to claim 29, further comprising:
determining third information according to the target data, wherein
the third information comprises at least one of the following:
a service sensing manner, wherein different sensing manners correspond to different transmit and receive ends of a first signal; and
a sending device and a receiving device that participate in sensing and communication, wherein
the first signal comprises at least one of the following: a sensing signal, a communication signal, and an integrated sensing and communication signal.

31. The method according to claim 30, wherein after the determining third information according to the target data, the method further comprises:
sending, by the core network device, the service sensing manner and/or the sending device and the receiving device that participate in sensing and communication to the sending device or the receiving device.

32. The method according to claim 29, wherein the sensing and communication QoS characteristic parameter further comprises at least one of a sensing and communication service type and a sensing and communication priority level; or the sensing and communication QoS characteristic parameter further comprises at least one of a sensing service type, a sensing priority level, a communication service type, and a communication priority level, wherein
the sensing and communication priority level is used to determine a resource scheduling priority of an integrated sensing and communication signal; the communication priority level is used to determine a resource scheduling priority of a communication signal; and the sensing priority level is used to determine a resource scheduling priority of a sensing signal.

33. The method according to claim 32, wherein the sensing service type comprises at least one of the following:
a delay-critical sensing service whose sensing physical range is greater than or equal to a first preset value;
a sensing service whose sensing physical range is greater than or equal to the first preset value;
a delay-critical sensing service whose sensing physical range is less than the first preset value; and
a sensing service whose sensing physical range is less than the first preset value.

34. The method according to claim 32, wherein the communication service type comprises at least one of the following:
a guaranteed bit rate communication service;
a non-guaranteed bit rate communication service; and
a guaranteed bit rate delay-critical communication service.

35. The method according to claim 32, wherein the sensing and communication service type comprises at least one of the following:
a delay-critical communication sensing service whose sensing physical range is greater than or equal to a second preset value;
a communication sensing service whose sensing physical range is greater than or equal to the second preset value;
a delay-critical communication sensing service whose sensing physical range less than the second preset value; and
a communication sensing service whose sensing physical range is less than the second preset value.

36. A quality of service characteristic parameter determining apparatus, wherein the apparatus is applied to a sending device and comprises:
a first determining module, configured to determine a sensing and communication quality of service QoS characteristic parameter, wherein
the sensing and communication QoS characteristic parameter comprises at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

37. A sending device, comprising a processor, a memory, and a program or an instruction that is stored in the memory and that can be run on the processor, wherein the program or the instruction is executed by the processor to implement the steps of the quality of service characteristic parameter determining method according to any one of claims 1 to 14.

38. A quality of service characteristic parameter determining apparatus, wherein the apparatus is applied to a receiving device and comprises:
a first obtaining module, configured to obtain a sensing and communication quality of service QoS characteristic parameter, wherein
the sensing and communication QoS characteristic parameter comprises at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

39. A receiving device, comprising a processor, a memory, and a program or an instruction that is stored in the memory and that can be run on the processor, wherein the program or the instruction is executed by the processor to implement the steps of the quality of service characteristic parameter determining method according to any one of claims 15 to 28.

40. A data sending apparatus, wherein the apparatus is applied to a core network device and comprises:
a second obtaining module, configured to obtain target data, wherein the target data comprises a sensing and communication quality of service QoS characteristic parameter, an integrated sensing and communication quality index ISAC QI, a sensing quality index SQI, and a communication quality index; and
a first sending module, configured to send the target data to a sending device and/or a receiving device, wherein
the sensing and communication QoS characteristic parameter comprises at least one of the following:
a sensing delay budget, a sensing resolution, a maximum sensing range, a sensing error, a continuous sensing capability, a sensing update rate, integrated sensing and communication signal quality, sensing security, sensing privacy, a detection probability, a false alarm probability, a packet delay budget, a packet error rate, a maximum data burst volume, a maximum data rate, a bit error rate, and an averaging window.

41. A core network device, comprising a processor, a memory, and a program or an instruction that is stored in the memory and that can be run on the processor, wherein the program or the instruction is executed by the processor to implement the steps of the data sending method according to any one of claims 29 to 35.

42. A readable storage medium, wherein the readable storage medium stores a program or an instruction, and the program or the instruction is executed by a processor to implement the steps of the quality of service characteristic parameter determining method according to any one of claims 1 to 28 or the steps of the data sending method according to any one of claims 29 to 35.

43. A chip, wherein the chip comprises a processor and a communication interface, the communication interface is coupled to the processor, and the processor is configured to run a program or an instruction to implement the steps of the quality of service characteristic parameter determining method according to any one of claims 1 to 28 or the steps of the data sending method according to any one of claims 29 to 35.

44. A computer program product, wherein the computer program product is stored in a non-volatile storage medium, and the computer program product is executed by at least one processor to implement the steps of the quality of service characteristic parameter determining method according to any one of claims 1 to 28 or the steps of the data sending method according to any one of claims 29 to 35.

45. A communication device, configured to perform the steps of the quality of service characteristic parameter determining method according to any one of claims 1 to 28 or the steps of the data sending method according to any one of claims 29 to 35.
